# EUROPEAN PATENT SPECIFICATION

(11) **EP 1 353 460 B1**
(45) Date of publication and mention of the grant of the patent: **11.06.2008**
(21) Application number: 02290921.2
(22) Date of filing: 12.04.2002
(51) Int. Cl.: H04B 10/17, H04B 10/08, H01S 3/094

(54) **Optical amplifier system**
Optische Verstärkervorrichtung
Système d' amplificateur optique

(43) Date of publication of application: 15.10.2003
(73) Proprietor: Corvis France R & D, 35760 Saint Grégoire (FR)
(72) Inventor: Davenet, Magali Kerfoz, 22300 Lannion (FR); Favre, François, 22700 Perros-Guirec (FR); Chauzat, Corinne, 22300 Lannion (FR); Fossey, Paul, 22560 Trébeurden (FR); Daniel, Stéphane, 22450 Kermaria Sulard (FR)
(74) Representative: Texier, Christian

(56) References cited:
- EP-A- 0 585 005
- WO-A-01/80467

## Description

### BACKGROUND OF THE INVENTION

The present invention is related to communications systems and, more particularly, to optical communications systems such as those that utilize wavelength division multiplexing ("WDM"). This field is continually changing and performance of devices, systems, and methods is constantly improving, particularly with respect to transmission distances, bit rate, and signal quality.

Such systems have been developed by taking into account the economic competitiveness, the satisfaction of the operators of communications systems (often called "carriers"), and opportunities offered by continuing technological improvements in components. Within the last decade, research on WDM equipment has been taken in several directions in order to improve the performances of the optical signal and, more generally, the performance of the optical transmission system, and the security during the handling of the equipment. There has also been significant work to produce systems, devices and apparatus which are more flexible than in the past.

Related to the improvement of performances of the optical transmission system, one problem facing the carriers is a constant need to increase transmission capacity to meet rising demand. In doing so, amplifiers throughout the system must also be upgraded in order to accommodate the upgrade in transmission capacity and new equipment associated with the upgrade. One solution is to use amplifiers with external pumps that can be upgraded or added according the needs of the carrier. However, such prior art methods do not allow for on-line upgradability. In other words, carriers have to interrupt their data transmission to increase upgrade the amplifiers.

For such high-speed and large-capacity optical transmission, it is important to suppress, or at least to minimize, the deterioration of signal waveforms due to nonlinear phenomena occurring in the optical transmission line. Much research has been carried out all over the world in order to understand and to minimize the non-linearities phenomenon, the effect of which is to distort the signal light pulse.

Carriers are interested in deploying optimized optical transmission lines over long, repeaterless distances. One method to construct such a system includes providing a powerful amplifier at the emission site (usually a doped fiber booster with preemphasis). The preemphasis is used to compensate for the power depletion due to the SRS (Self-pumping Raman Scattering) gain. But such a solution has significant disadvantages in so far as it introduces high power and, therefore, strong nonlinearities.

In addition to signal channels, WDM transmission systems often include an independent channel, named the optical supervisory channel ("OSC"), which is used to transmit service signals. Prior art in the field includes U.S. Patent Number 5,113,459, and corresponding Italian Patent application number 19186, wherein the OSC is inserted/extracted at particular points of the line at specific wavelengths. A disadvantage of that solution is that the OSC is transmitted at a wavelength that is substantially different than the wavelength of the signal channels, thereby requiring different amplifiers.

WDM systems often include control channels. In order to maintain a constant power at the amplifier input, one method consists of controlling the power of each control channel as a function of the number of data channels.

Regarding the security field, an other problem facing carriers is, for instance, the need to control the amplifier pumps and to be able to react very quickly to changing conditions, such as a fiber break. The amplifiers can utilize high levels of optical power, which can be harmful to the human eyes and optical equipment. Raman pump powers, for example, can often be between 800 mW and 1,5W. The prior art discloses techniques which implement controls at the extremities of the line, and management of the control is usually bi-directional, resulting in slow response times, which can be dangerous to people and equipment.

Regarding the upgrading of the system, a major problem is that amplifier pumps are typically an integral part of the amplifiers (see for example WO 01/80467), and it is difficult to remove them. As a result, there is limited flexibility to alter, repair, or upgrade the characteristics of the pumps and, therefore, limited flexibility to alter, repair, or upgrade the characteristics of the amplifiers. As a result, replacing a failed pump or performing other maintenance is difficult with prior art amplifiers and requires specially trained personnel.

In the optical and electronics domains, components are often assembled in a manner to minimize the dimensions of the final product which contains the components. Generally, the products formed from the components are densely packed and difficult to access. Components are often placed close together with minimum space in between. Components are typically fastened either by screws or welds, or are maintained by glides, and sometimes include several small units embedded in another unit.. The technician who wants to repair or replace one of these components is confronted with problems, such as a lack of space to through which to access the components and a lack of facilities needed to safely and gently extract the components.

Among the components maintained on these supports, there are also optical fiber sections which need to be protected from damage. One method consists of maintaining the fiber in recesses, which is insufficient to safely secure the fiber.

The problems met in the field of the systems of telecommunication are numerous in so far as this domain relates to optics, electronics and mechanics. The aforementioned problems are examples among others that researchers have attempted to solve.

### BRIEF DESCRIPTION OF THE INVENTION

The present invention relates to a system and a method for detecting proper optical interconnection between an amplifier and an external pump unit as defined in claims 1 and 18 respectively.

The present invention also relates to a corresponding optical communications system as defined in claim 24.

The present invention teaches solutions related to providing improved performance in optical systems. For example, to increase the capacity of a transmission system without interrupting traffic by installing additional external pumps into the amplifier.

In the WDM transmission system related to the present invention, the optical service channel is amplified in the same way as the traffic-carrying channels, without the need for different kinds of amplification.

In order to satisfy the security requirement, the present invention teaches the use of external pumps which can be easily connected or disconnected. In addition, the present invention allows for greater control of the connection or the disconnection of the pumps, activates an alarm, and can turn off the external pumps if the external pumps are not properly connected. Furthermore, when the external pumps are connected, there is constant control of the pumps and, consequently, the inevitable breakdown of the pumps is readily detectable. The control afforded by the present invention is made possible with the use of an optical signal, which is preferably in the same wavelength range as the pumps, so that the insertion loss is minimized (e.g., 0.2 dB). The optical connection control taught by the present invention can be seen as a distributed connection control when used with several optical connectors.

The teachings of the present invention are also particularly well-adapted if a breakdown occurs close to the Raman pumps where the reflection rate can be very high. The present invention provides for permanent control of the line and shutdown of the power in a very short time.

The present invention discloses, as a third category of solution, devices, systems and methods which offer more simplicity, flexibility and adaptability in the upgrading, repair, and maintenance of a communication system.

The present invention will be more fully understood from the detailed description given in the following pages and from the accompanying drawings, which are provided for illustration purposes only, and not for the purpose of limiting the present invention.

### BRIEF DESCRIPTION OF THE DRAWINGS

Embodiments of the present invention will now be described, by way of example only, with reference to the accompanying drawings, wherein:

Figs. 1 and 2 show examples optical communications systems;

Fig. 3 shows an amplifier of the present invention;

Figs. 4 and 5 show power versus distance and gain for an EDFA and the amplifier of the present invention;

Figs. 6 and 7 show simulated results corroborated by experiments of gain versus distance for an EDFA and the amplifier of the present invention;

Fig. 8 shows an amplifier of the present invention;

Figs. 9-11 show several operational variations of the amplifier of the present invention;

Fig. 12 shows an embodiment of an upgradable amplifier of the present invention;

Fig. 13 shows an external pump unit of the present invention;

Figs. 14-19 show various combinations of upgradable amplifiers and external pump units;

Fig. 20 shows another embodiment of an upgradable amplifier of the present invention;

Fig. 21 shows another external pump unit of the present invention;

Fig. 22 shows another embodiment of an upgradable amplifier of the present invention;

Fig. 23 shows another external pump unit of the present invention;

Fig. 24 shows an embodiment of the pump control system for use to detect a fiber break with a counter-pumped Raman amplifier of the present invention;

Fig. 25 shows an example of a fiber break causing the Raman pump power to be reflected;

Fig. 26 shows another embodiment of the present invention utilized in a Raman co-pump application;

Fig. 27 shows another example of a downstream fiber break;

Fig. 28 shows another example of a upstream fiber break;

Fig. 29 shows pump depolarization device of the present invention;

Figs. 30-33 show embodiments of portions of transmission systems utilizing an optical service channel of the present invention;

Fig. 34 shows an embodiment of the present invention with several transmitters wavelength division multiplexed together and then amplified by an EDFA;

Fig. 35 shows one embodiment of a lever that may be used to facilitate removal of circuit boards and modules;

Figs. 36 and 37 show an embodiment of a module in which optical fiber is managed with recesses and clips to secure the optical fiber; and

Figs. 38 and 39 show embodiments of a fiber retention clip that may be used with the present invention.

### DETAILED DESCRIPTION OF THE INVENTION

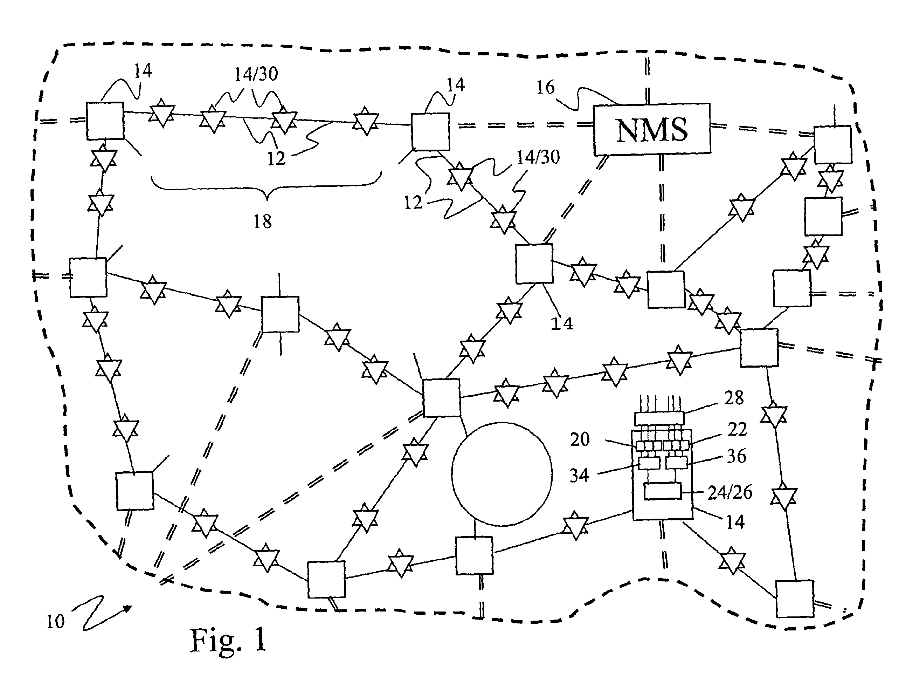

Fig. 1 illustrates an optical communications system 10 which includes optical paths 12 connecting nodes and network elements 14. Advantages of the present invention can be realized with many system 10 configurations and architectures, such as an all optical network, one or more point to point links, one or more rings, a mesh, other architectures, or combinations of architectures. The system 10 illustrated in Fig. 1 is a multi-dimensional network, which can be implemented, for example, as an all optical mesh network, as a collection of point to point links, or as a combination of architectures. The system 10 can employ various signal formats, and can also convert between formats. The system 10 can also include more or less features than those illustrated herein, such as by including or deleting a network management system ("NMS") 16 and changing the number, location, content, configuration, and connection of nodes 14.

The optical paths 12 can include guided and unguided transmission media, such as one or more optical fibers, ribbon fibers, planar devices, and free space devices, and can interconnect the nodes 14 providing optical communication paths through the system 10. Various types of transmission media can be used, such as dispersion shifted ("DSF"), non-dispersion shifted ("NDSF"), non-zero dispersion shifted ("NZDSF"), dispersion compensating ("DCF"), polarization maintaining ("PMF"), single mode ("SMF"), multimode ("MMF"), other types of transmission media, and combinations of transmission media. Furthermore, the transmission media can be doped, such as with erbium, germanium, neodymium, praseodymium, ytterbium, other rare earth elements, other dopants, and mixtures thereof. The paths 12 can carry one or more uni- or bi-directionally propagating optical signal channels or wavelengths. The optical signal channels can be treated individually or as a single group, or they can be organized into two or more wavebands or spectral groups, each containing one or more optical signal channel. The optical signal channels within a spectral group are all treated the same. For example, all optical signal channels in a spectral group are switched in the same manner, and all are dropped at the same locations, even if every optical signal channel in the spectral group is not utilized at every location at which it is dropped. The use of spectral groups to treat groups of channels in the same manner is one way to efficiently manage large numbers of optical signal channels. One or more paths 12 can be provided between nodes 14 and can be connected to protection switching devices and/or other redundancy systems. The optical path 12 between adjacent nodes 14 is typically referred to as a link 18, and the optical path 12 between adjacent components along a link 18 is typically referred to as a span.

The nodes and network elements 14 can include one or more signal processing devices including one or more of various optical and/or electrical components. The nodes 14 can perform network functions or processes, such as switching, routing, amplifying, multiplexing, combining, demultiplexing, distributing, or otherwise processing optical signals. For example, nodes 14 can include one or more transmitters 20, receivers 22, switches 24, add/drop multiplexers 26, amplifiers 30, interfacial devices 28, multiplexers/combiners 34, and demultiplexers/distributors 36, as well as filters, dispersion compensating and shifting devices, monitors, couplers, splitters, and other devices. One embodiment of one node 14 is illustrated in Fig. 1, although the nodes 14 can have many other variations and embodiments.

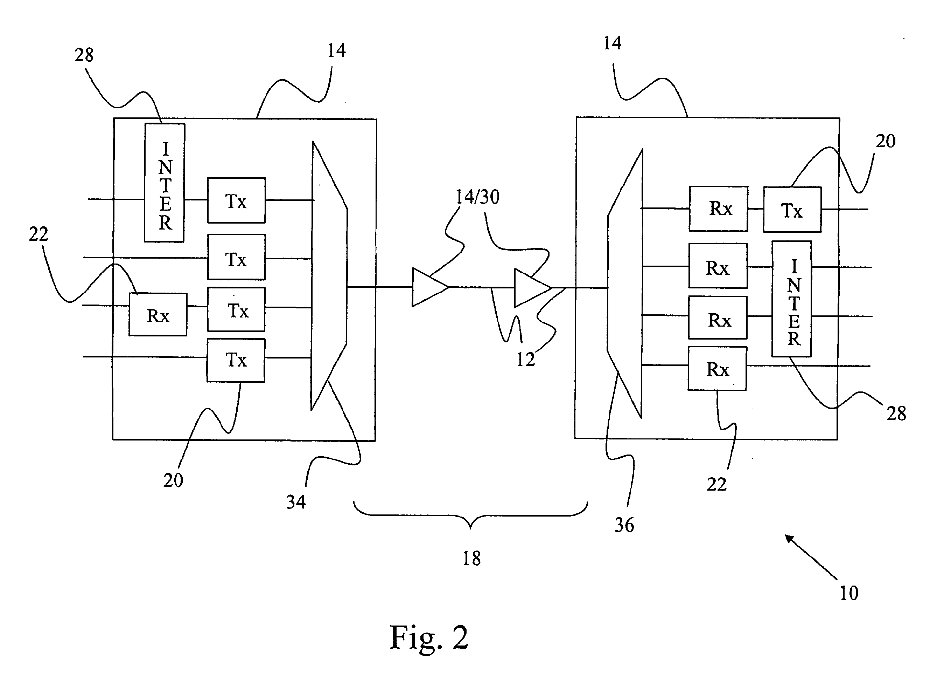

The NMS 16 can manage, configure, and control nodes 14 and can include multiple management layers that can be directly and indirectly connected to the nodes 14. The NMS 16 can be directly connected to some nodes 14 via a data communication network (shown in broken lines) and indirectly connected to other nodes 14 via a combination of a directly connected node and communications paths in the optical system 10. The data communication network can, for example, be a dedicated network, a shared network, or a combination thereof. A data communications network utilizing a shared network can include, for example, dial-up connections to the nodes 14 through a public telephone system. The NMS 16 can reside at one or more centralized locations and/or can be distributed among components in the system 10. Mixed data or supervisory channels can be used to provide connections between the network elements of the NMS 16, which can be located in nodes 14 or remote from nodes 14. The supervisory channels can be transmitted within and/or outside the signal wavelength band and on the same medium or a different medium than the wavelength band. Fig. 2 illustrates another embodiment of the system 10 including a link 18 of four nodes and network elements 14. That system 10 can, for example, be all or part of a point to point system 10, or it may be part of a multi-dimensional, mesh, or other system 10. One or more of the nodes 14 can be connected directly to the network management system 16 (not shown). If the system 10 is part of a larger system, then as few as none of the nodes 14 can be connected to the network management system 16 and all of the nodes 14 can still be indirectly connected to the NMS 16 via another node in the larger system 10.

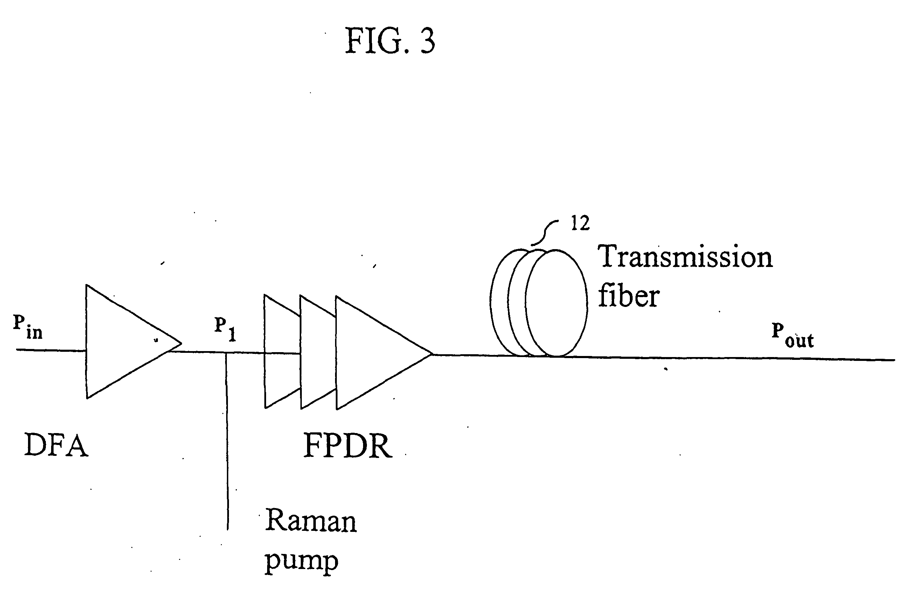

Fig. 3 illustrates an amplifier with an improved optical signal-to-noise ratio and reduced non-linearities. The amplifier includes a doped fiber amplifier ("DFA"), or any lumped amplifier, and a forward-pumped distributed Raman amplifier ("FPDR"). In that example, the lumped amplifier is near the pump, and Raman pumping is a co-propagating with the signal. Optical signal-to-noise ratio ("OSNR") depends on the WDM multiplex signal power, the number of channels, the number of spans, and is conversely proportional to loss/span. The signal power can be very high (in some cases exceeding 30 dBm), especially in the case of repeaterless systems where the loss/span can exceed 60dB. In such systems, effects such as non-linearities, the spectral non-flatness of the amplifier, the spectral non-flatness of the components, and the spectral attenuation of fiber must be considered.

Non-linearities induce spectral and temporal distortions on channels (SPM, XPM, Brillouin scattering, self-Raman) and also on the relative power of each channel . Self-Raman pumping (or, more exactly, the self-pumping Raman scattering gain between channels) is a natural phenomenon in multiple-channel transmission systems and results in a power transfer from smaller wavelengths towards higher wavelengths. This phenomenon degrades the OSNR of channels with small wavelengths and degrades the flatness of the OSNR over the spectral band.

These effects, especially non-linearities, result in non-equalized and non-optimized performance over the spectral band. The performance of these systems is often determined by the performance of the worst channel, with a strong dependence on the OSNR. Accordingly, there is a need to equalize the channels without causing nonlinear penalties.

The Raman amplifier may be operated in the saturation region (i.e pump depletion) for increased stability of Pout. The combination of a DFA and a Raman amplifier compliment each other, with each amplifier compensating for a gain profile tilt in the other. When P1 of the first amplifier varies, gain of the second amplifier naturally varies also, with a sign opposite of the first and, consequently, maintaining a stabilized output power (Pout).

The amplifiers complement each other and allow for a reduction of non-linearities (at given OSNR) and a stabilization of the output power. In particular, self-Raman tilt in high power/high flow WDM systems is sharply reduced.

The amplifier of the present invention provides improved transmission characteristics, such as reduced cross-talk and reduced non-linear effects, allowing for closer channel spacing. Effects such as Brillouin scattering can also be reduced due to distributed gain and lower maximum in-line power for a given OSNR fixed at the output with the present invention.

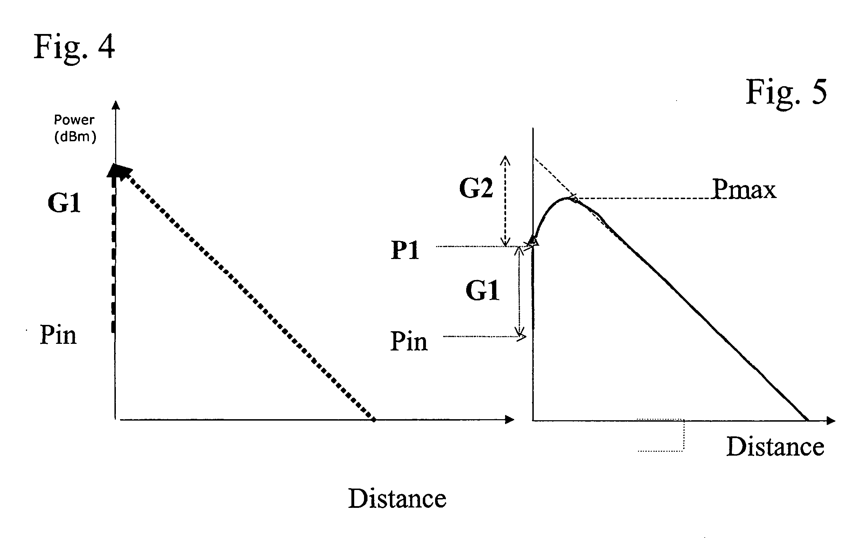

Figs. 4 and 5 illustrate power versus distance and gain for a DFA (Fig. 4) and the amplifier combination of the present invention (Fig. 5). The first amplifier is characterized by an output power P1 and a gain G1. Generally, the first amplifier works in the saturation phase. The second amplifier provides a complementary gain distributed in the beginning of line. With reference to Fig. 5, the second amplifier has a gain G2, which is distributed on the transmission line. G2 is dependant on pump power and output power of first amplifier. The present invention provides distributed gain in the second amplifier, allowing for lower peak signal power for a fixed output power, thereby providing for improved transmission characteristics, such as reduced cross-talk, reduced Brillouin Scattering and generally reduced non-linear effects. Such amplifiers could be considered as equivalent to an amplifier with an output power equal to (Pin + G1), with simultaneously reduced in-line power and reduced non-linearities.

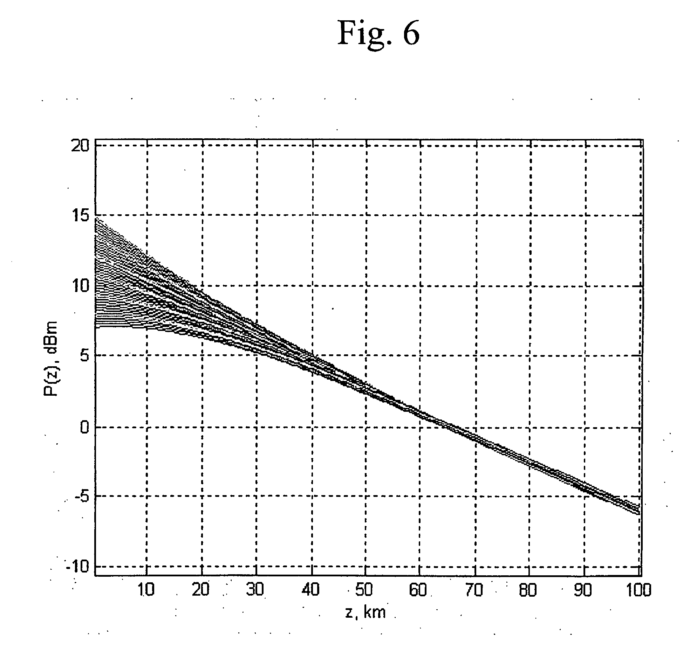

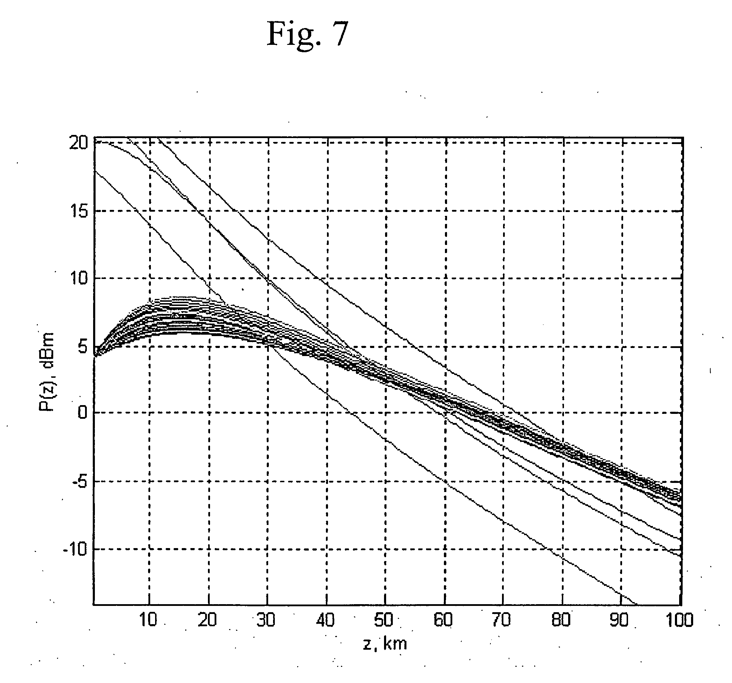

Figs. 6 and 7 further illustrate simulated results corroborated by experiments of gain versus distance for a DFA (Fig. 6) and one example of an amplifier combination (Fig. 7). The data in Fig. 6 was obtained with a power of 27dBm and 8 dB of preemphasis for a spectrally flat output power level, with forty-three signal wavelengths spaced at 100 GHz in pure silica core fiber. The data in Fig. 7 was obtained with four pump diodes at the wavelengths and powers disclosed in the following table with a 20dBm DFA output power and a 7 dB Raman gain with the remainder of the conditions being the same as that for Fig 6.

| Pump λ (nm) | Pump power (mW) |
|---|---|
| 1420 | 234 |
| 1427.5 | 65 |
| 1435 | 174 |
| 1462 | 195 |

The present invention may be operated with no pre-emphasis to obtain flat output power because the amplifier compensates for in-line self-Raman tilt. With reference to Figs. 6 and 7, it is noted that at the same Pout (e.g., -6dBm/channel at 100 km), provided and equalized over all channels, in-line power can reach 15 dBm on the smallest wavelength channel with a pre-emphasis of 8 dB (Fig. 6), whereas according to our invention (Fig. 7), no pre-emphasis is required and power does not exceed 8 dBm/channel, which considerably reduces non-linearities compared to the prior art.

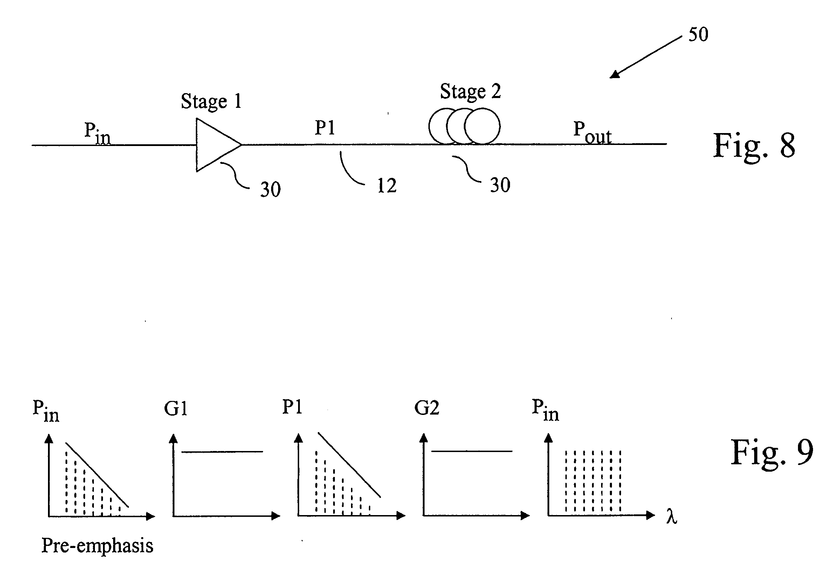

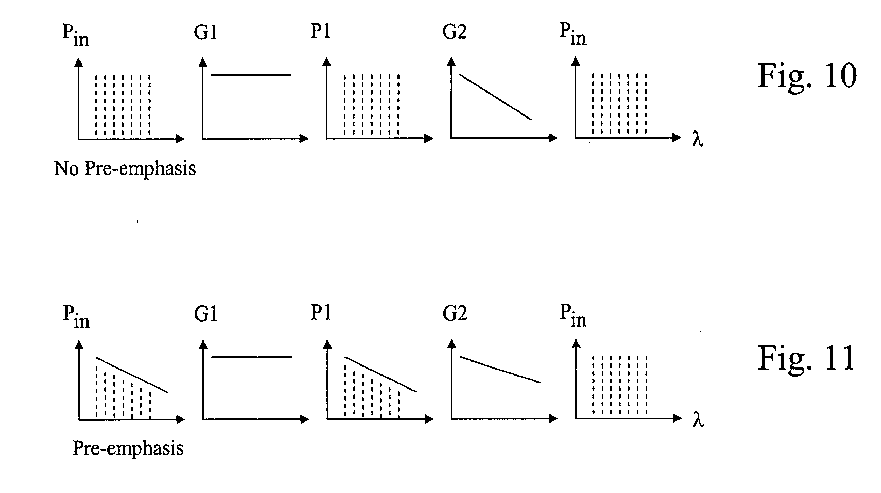

Fig. 8 illustrates an amplifier combination, and Figs. 9-11 illustrate several operational variations of that amplifier. Fig. 9 uses a pre-emphasis of the input signal (which is less pre-emphasis than is required with a classical booster), a flat DFA gain profile G1, and a flat Raman gain profile G2. As a result, the signal profile emerging from the DFA will reflect the pre-emphasis. The second amplifier, however, will result in the signal profile flatening due to self-pumping. This embodiment is well suited to a system without repeaters where there is more tolerance of non-flatness in the span gain. Fig. 10 uses no pre-emphasis, a flat DFA gain profile G1, and a Raman gain tilt G2 counter to the "natural" gain tilt caused by self-pumping. This embodiment tends to produce flat span gain and is well suited to longer haul systems with repeaters with a limited pre-emphasis. Fig. 11 is a combination of Figs. 9 and 10 and uses a moderate pre-emphasis and a moderate Raman gain tilt G2 to achieve a flat signal profile. This embodiment tends to produce flat signal profile and is well suited to longer haul systems with repeaters. The amplifiers of the present invention offer several advantages, such as:
- reduced non-linearities due to lower peak power and amplifiers which provide complementary gain to each other;
- reduced self-Raman tilt and, consequently, pre-emphasis required for the OSNR equalization is reduced or even eliminated, and the extra non-linearities, due to this pre-emphasis, are also limited;
- stabilized output power of the amplifier; and
- optimized performances on all channels.
This embodiment can also be combined with counter pumping Raman at the end of the line.

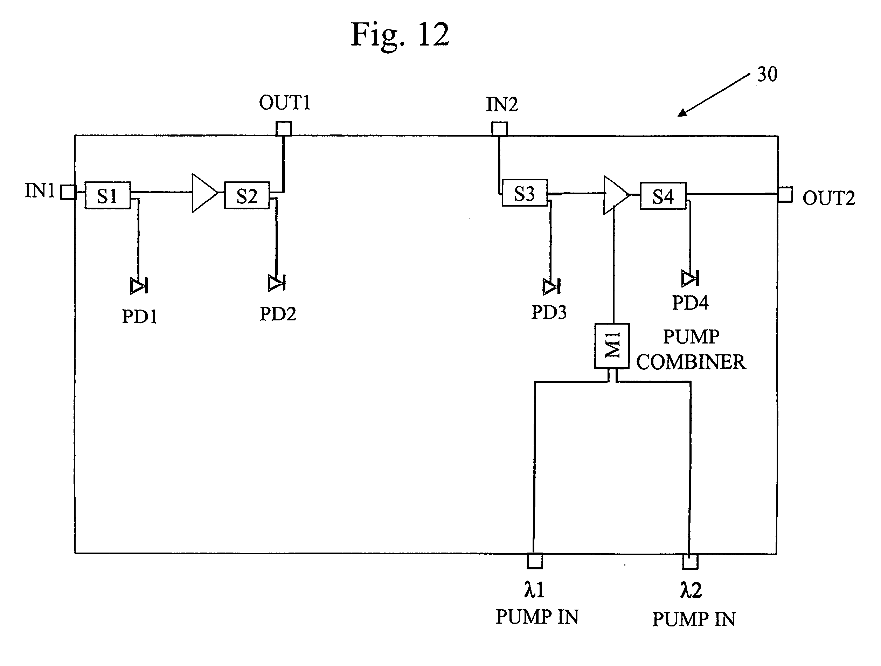

Fig. 12 illustrates an embodiment of an upgradable amplifier 30. The amplifier can be provided at low cost and allows for increased optical output power in response to the needs of the customer, without interrupting the traffic through the amplifier. The upgradable amplifier 30 includes input port IN1 and output port OUT1 for the first amplifier, and input port IN2 and output port OUT2 for the second amplifier. The first amplifier includes one or more internal pumps (not shown) and the second amplifier includes connections for external pumps. The second amplifier may also include internal pumps (not shown). The illustrated embodiment includes two external pump connections, for two different pump wavelengths, although more or less connections, usable with more or less wavelengths, are possible. The output of the first amplifier OUT1 may be directly connected to the input of the second amplifier IN2, or one or more devices, such as add/drop multiplexers, variable attenuators, and dispersion compensating fiber, may be inserted between the amplifiers. Of course, in another embodiment, external pump connections are provided for both amplifiers. That embodiment could also be useful in case of breakdown of its internal pumps.

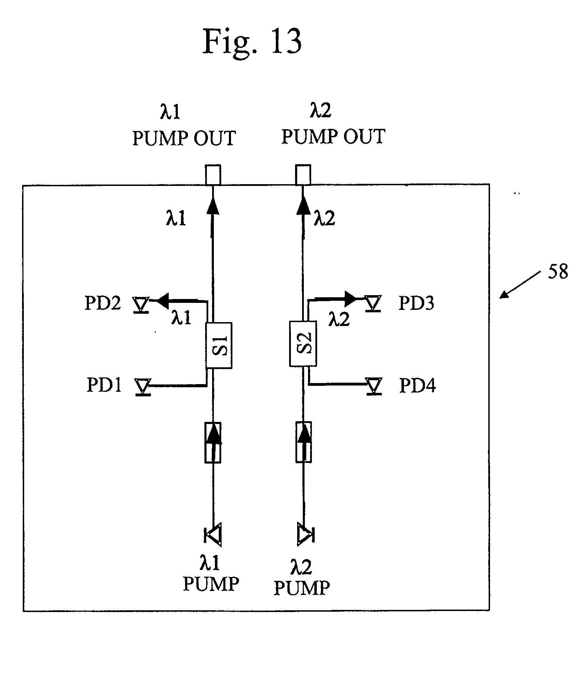

Fig. 13 illustrates an external pump unit ("EPU") 58 which may be used with the upgradable amplifier 30 of Fig. 12. The external pump unit 58 includes two pumps, which may be light emitting diodes, lasers, or other pump sources, which may emit the same or different pump wavelengths. The EPU 58 also includes two output ports, which may be connected to the input ports of the second amplifier 30 illustrated in Fig. 12. The external pump unit 58 may include more or less pumps and output ports than those illustrated in Fig. 13, and the output ports may be connected to the same or to different amplifiers 30.

The upgradable amplifier 30 and EPU 58 contain photodetectors, such as photodiodes or other optical detectors, for providing feedback control. For example, photodetector PD4 in the amplifier 30 (Fig. 12) may be used to sample the output power and provide feedback to control the pump power and control the output of the amplifier 30. The output power can be controlled, such as with software, to allow additional flexibility with the amplifier 30. Additional flexibility may afforded by, for example, providing optical connectors on the backplane of the EPUs 58 so that the units can be easily inserted and quickly establish contact with the controllers and software. Such optical connections on the backplane guarantee the electrical disconnection before the optical disconnection, so that the laser is switched off before the unit is removed. Optical connections are also protected by the device.

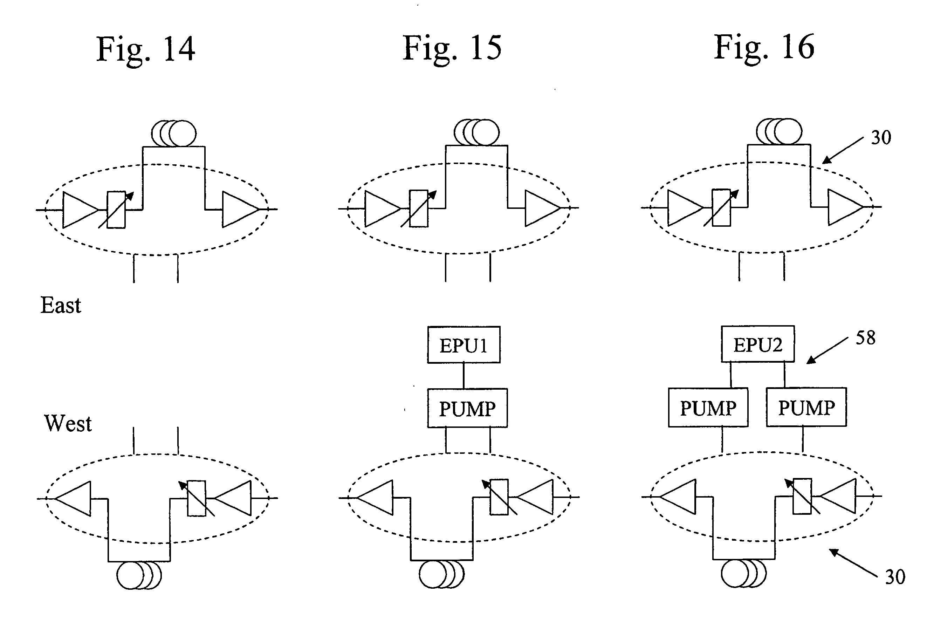

Figs. 14-19 illustrate various combinations of upgradable amplifiers 30 and EPUs 58. In those illustrations, the term "EPU1" indicates an EPU 58 with one output port, and the term "EPU2" indicates an EPU 58 with two output ports. The examples show amplifiers 30 used in pairs, each connected to a different communication path, one labeled "east" and one labeled "west". The present invention can also be used with single amplifiers 30, or with amplifiers 30 combined in groups of more than two. The examples in Figs. 14-19 show how different amplifier gain can be achieved with different combinations of amplifiers 30 and EPUs 58.

In Fig. 14, no EPU 58 is utilized and the first amplifier pumps provide all of the needed gain. In Fig. 15, one EPU pump, such as at λ1, may be provided to the west amplifier 30 to increase the gain. In Fig. 16, two EPU pumps may be added to further increase gain.

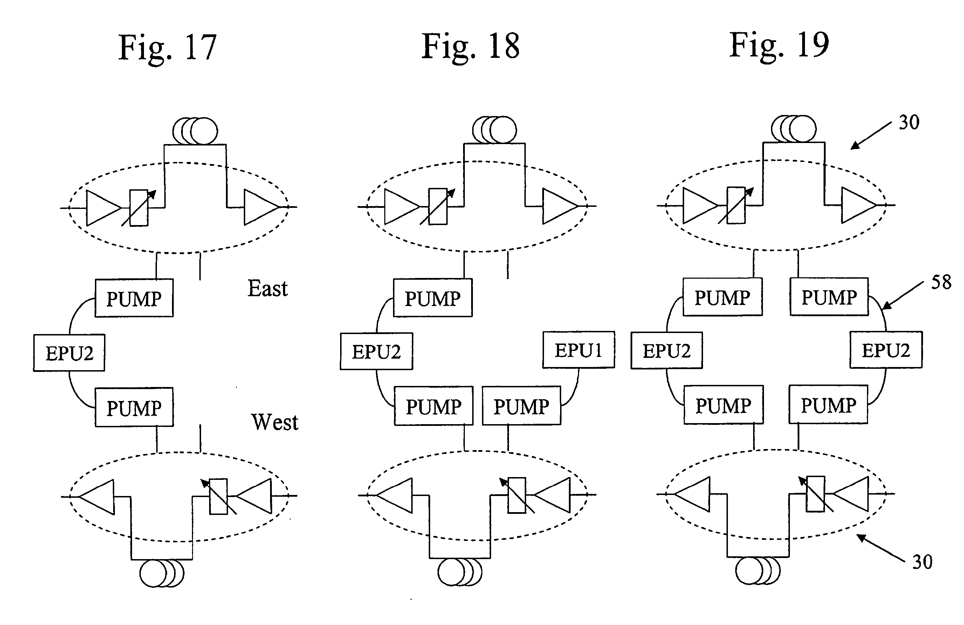

In Fig. 17, two EPU pumps, such as λ1 and λ2, typically in the 1420-1490nm wavelength range, are used to increase gain. One pump is connected to each amplifier 30. In Fig. 18, an additional EPU pump, such as λ2, is used to further increase the gain. In Fig. 19, another EPU pump is added for additional gain.

Various modifications and combinations of upgradable amplifiers 30 and EPUs 58 can be effected with the present invention. For example, the external pump wavelengths may be between 1460 and 1488 nm, with a width of up to 16.5 nm. In one example, the pump values are 1470nm and 1485nm, with a pumping width of 15nm.

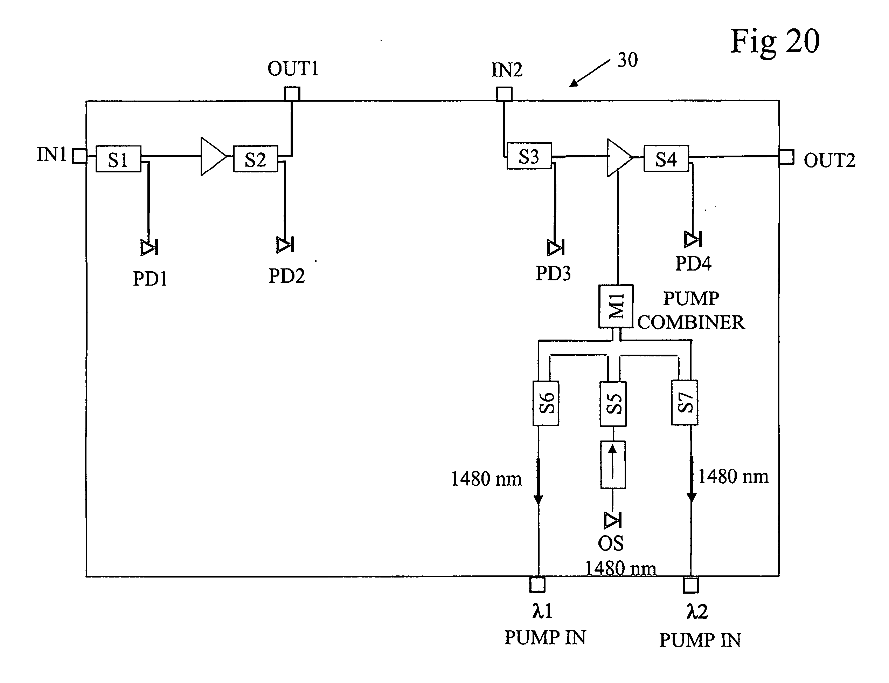

Fig. 20 illustrates one embodiment of an upgradable amplifier 30 including pump control system, including an optical source OS for providing an optical signal to be used to detect a pump disconnection. The optical signal is divided to "light up" each external pump port. The optical connection control device is characterized by very low insertion loss. An isolator may also be provided to protect against optical energy propagating back to the optical source. The optical source OS may be regulated to account for variations in temperature, degradation of the source, etc.

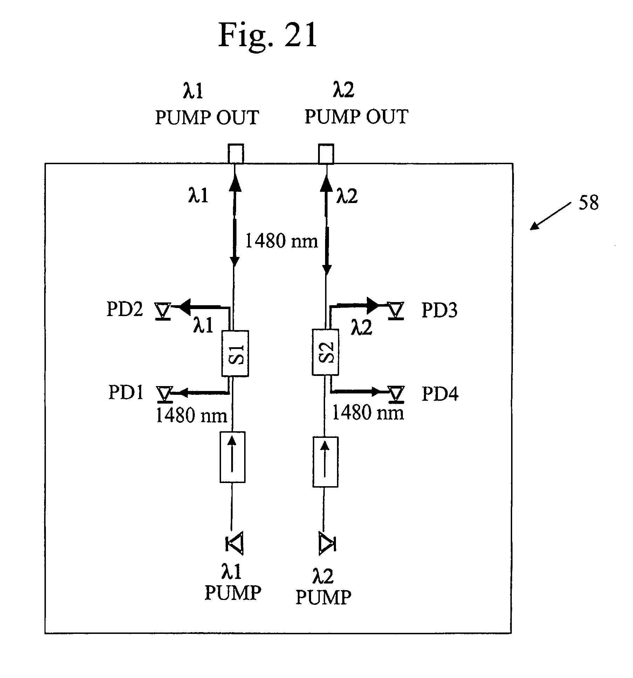

Fig. 21 illustrates one embodiment of an external pump unit ("EPU") 58 that may be used in conjunction with the pump control system illustrated in Fig. 20. When the EPU 58 is properly connected to the amplifier 30 or other device utilizing the pump control system, optical energy from the optical source OS propagates backward through the EPU 58 and is detected by photodetectors PD1 and PD4. If the optical power detected by photodetectors PD1 and PD4 is below a predetermined threshold, an alarm is activated and the pumps are turned off. Typically, pumps can be turned off in less than 100ms. The thresholds of photodetectors PD 1 and PD4 are selected to detect a disconnection between the EPU 58 and the amplifier 30, and to thereby provide for eye-safety and protect against inadvertent damage to optical connectors. This control is particularly useful with powerful optical sources (from class III).

In one embodiment, the optical source is 25mW, the couplers S6 and S7 (Fig. 20) are 1% tap couplers, and the optical source OS power emitted from the connectors on the amplifier 30 is about -9dBm and the threshold at the photodetectors PD 1 and PD3 in the EPU 58 are set to -12dBm. It is important to choose a laser with a wavelength similar to the useful signal wavelength in order to minimize the insertion loss in the pump unit due to the addition of the control device.

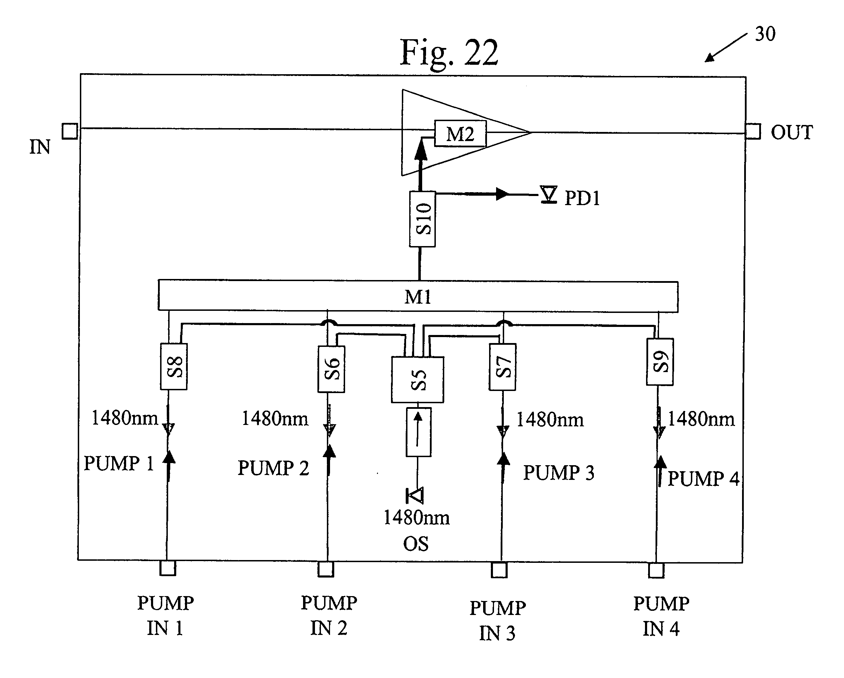

Fig. 22 illustrates another embodiment of an upgradable amplifier 30 utilizing the pump control system. In that embodiment, there is a single optical source OS and four connections and, for example, the detection threshold may be -15dBm. More optical sources OS and more or less connections may also be used with the present invention. Furthermore, the invention may be used in other variations.

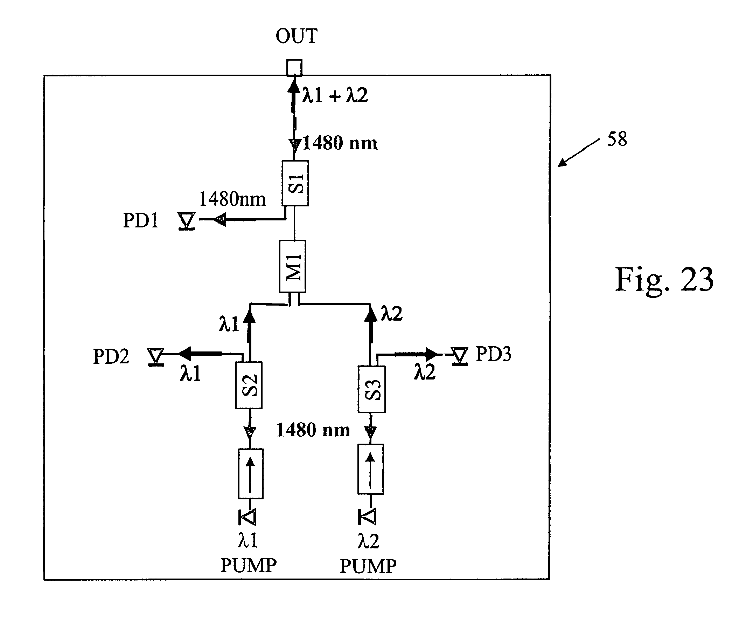

Fig. 23 illustrates another embodiment of the EPU 58 in which a single connector is used with two pumps, and in which a single photodetector PD 1 is used to detect to optical signal for the pump control system. Four EPUs 58 such as that illustrated in Fig. 23 may be connected to the amplifier 30 illustrated in Fig. 22.

The pump control system may utilize optical sources producing signals in the 1420nm to 1490nm range in order to take advantage of commercially available components, which tend to be optimized for that wavelength range. For example, optical sources at 1480nm are inexpensive and provide a suitable power output for the present invention. Alternatively, other signal wavelengths may be used, such as 1300nm, although such components are not as suitable for commercially available components. For example, tests have shown that optical sources at 1480nm used with commercially available components have produced insertion losses of no more than 0.2 dB between the amplifier 30 and EPU 58 illustrated in Figs. 20 and 21. Similarly, insertion losses of no more than 0.4 dB have been found between the amplifier 30 and EPU 58 illustrated in Figs. 22 and 23. However, the use of 1300nm optical source in similar arrangements results in at least 0.8 dB of insertion loss.

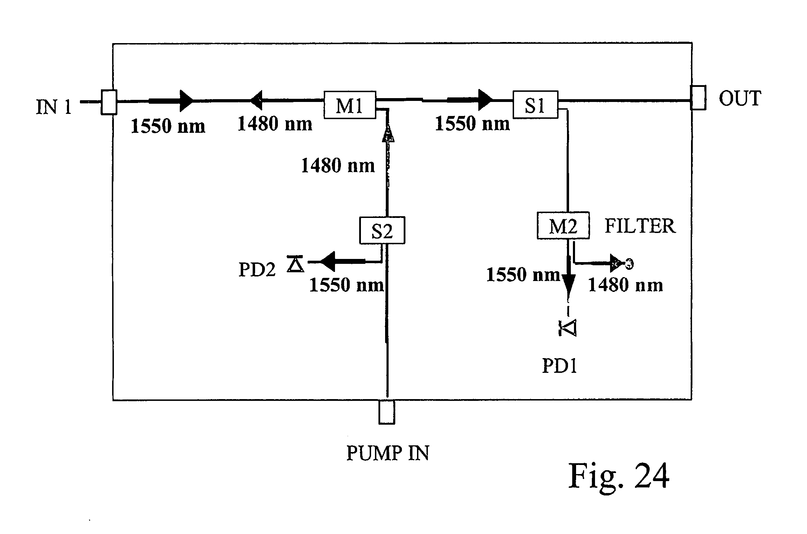

Fig. 24 illustrates another embodiment of the pump control system for use to detect a fiber break with a counter-pumped Raman amplifier. In that embodiment, two photodetectors PD 1 and PD2 are used. PD 1 detects, and may be used to control, the optical power of the data signals. If the power detected by PD1 falls below a predetermined threshold, it generates an error signal and shuts off the pumps on the assumption that a fiber break has occurred. Sometimes, however, a fiber break or other event can result in the Raman pump power being reflected. In that event, PD 1 may mistakenly interpret the reflected Raman pump power as data signals, and thereby fail to shut off the Raman pumps. A mistaken reading may occur at PD1 even if wavelength filters or wavelength demultiplexers are used to separate the Raman pump wavelengths and the Raman ASE from the data wavelengths, because filters and demultiplexers do not provide complete wavelength isolation.

PD2, in contrast, detects the reflected Raman pump power. PD2 normally detects a low signal which is reflected Raman pump energy. In the event of a fiber break which causes a significant reflection of Raman pump power, PD2 will detect increased optical power. If PD2 detects power greater than a predetermined threshold, it generates an error signal and shuts down the Raman pumps, even if photodetector PD mistakenly interprets the Raman pump power to be data signals.

In one embodiment, the system shuts down the Raman pumps when a return Raman pump power of 0dBm or more is detected by PD2, which corresponds to a reflection of about -29dB for an injected Raman pump power of 29dBm. Similarly, PD1 may be set to shut down the Raman pumps when it detects less than about -19dBm.

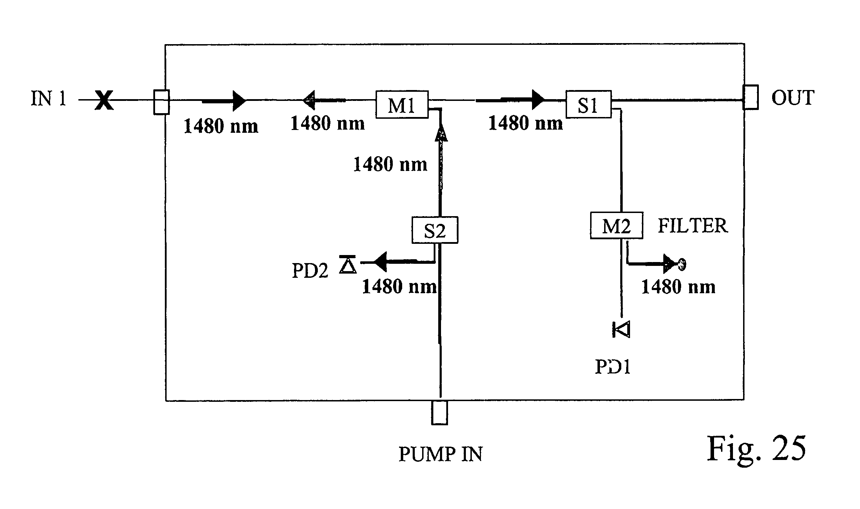

Fig. 25 illustrates an example of a fiber break causing the Raman pump power to be reflected. The present invention will properly identify the problem and shut down the Raman pumps via either PD1 or PD2, depending on the magnitude of the reflected Raman pump power.

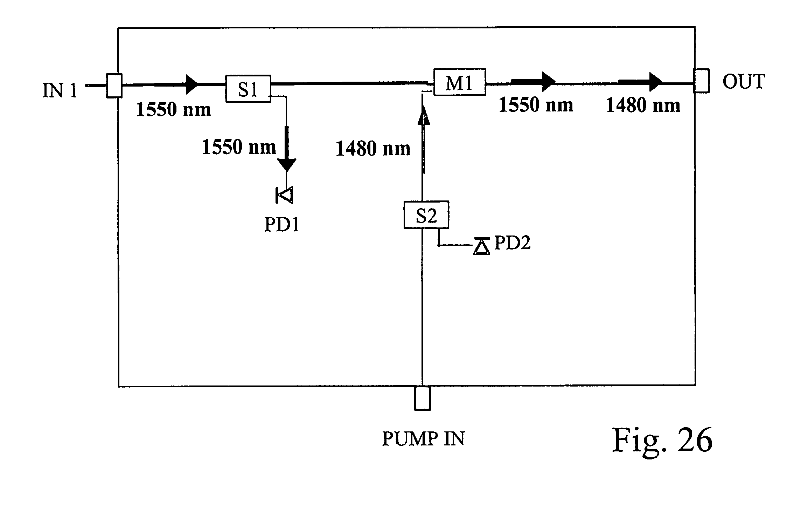

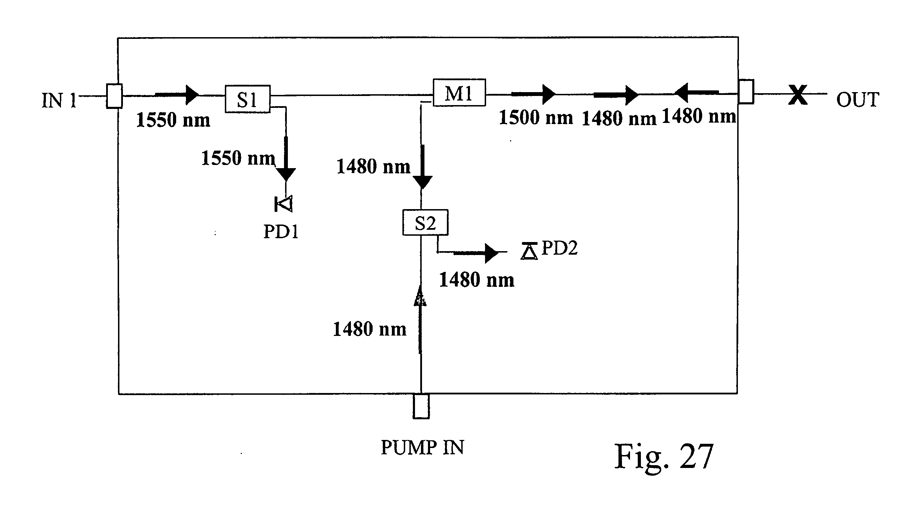

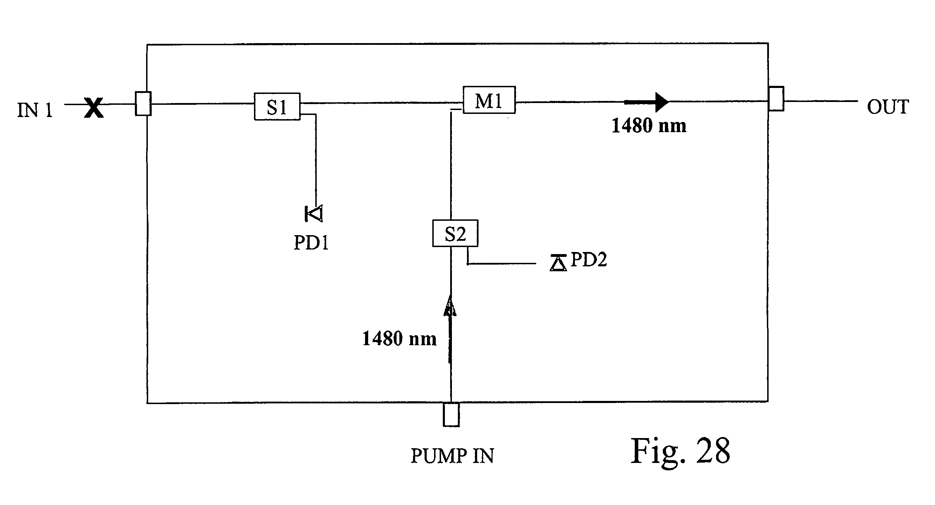

Fig. 26 illustrates another embodiment of the present invention utilized in a Raman co-pump application. Fig. 27 illustrates an example of a fiber break downstream of the embodiment of Fig. 26. In that example, photodetector PD2 will detect the problem and shut down the Raman pumps. Fig. 28 illustrates an example of a fiber break upstream of the embodiment of Fig. 26. In that example, photodetector PD 1 will detect the problem and shut down the Raman pumps.

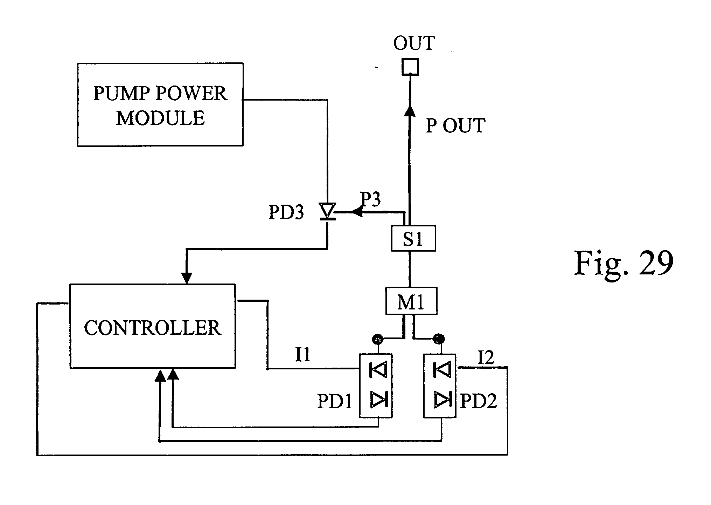

Fig. 29 illustrates a pump depolarization device that may be used, for example, with amplifier pumps. For example, a device and a method that may be used with pumps having both high power (typical in the case of Raman amplification) and depolarized pumps (typical in the case of forward-propagating Raman amplification) and which can be used regardless of the power required at the pump output. The device includes two pumps, a polarization combiner, and several photodetectors for detecting optical power and providing feedback to a controller. The pumps may be, for example, light emitting diodes, lasers, or other pump sources. The device may also include a pump power module for producing a signal indicative of the total desired pump power.

The pumps produce polarized optical signals which are provided via polarization maintaining fiber to a polarization combiner. The axis of the polarization maintaining fiber is oriented such that the optical signals are orthogonally polarized when they emerge from the polarization combiner. Photodetectors PD 1 and PD2 measure the optical power of the pumps, and photodetector PD3 measures the combined optical power via a tap coupler. The controller receives the feedback from the photodetectors and controls the pump power to produce the desired output.

By combining the two polarized pump signals so that they are orthogonally polarized, the resultant signal is effectively depolarized if the powers of the pumps are equal. Based on the feedback signal from photodetector PD3, the controller adjusts the pumps so that the total pump power is maintained at the required level. Furthermore, the feedback from photodetectors PD 1 and PD2 allows the controller to maintain the power of the pumps equal to each other, thereby creating depolarized pump signals. Lasers age and their performance changes in a manner that is often difficult to predict. If, for instance, laser 2 decreases its power output, the controller, on the feedback signal from photodetector 2, adjusts P1 so that both powers P1 and P2 are equal in order to keep the combined pump signals depolarized.

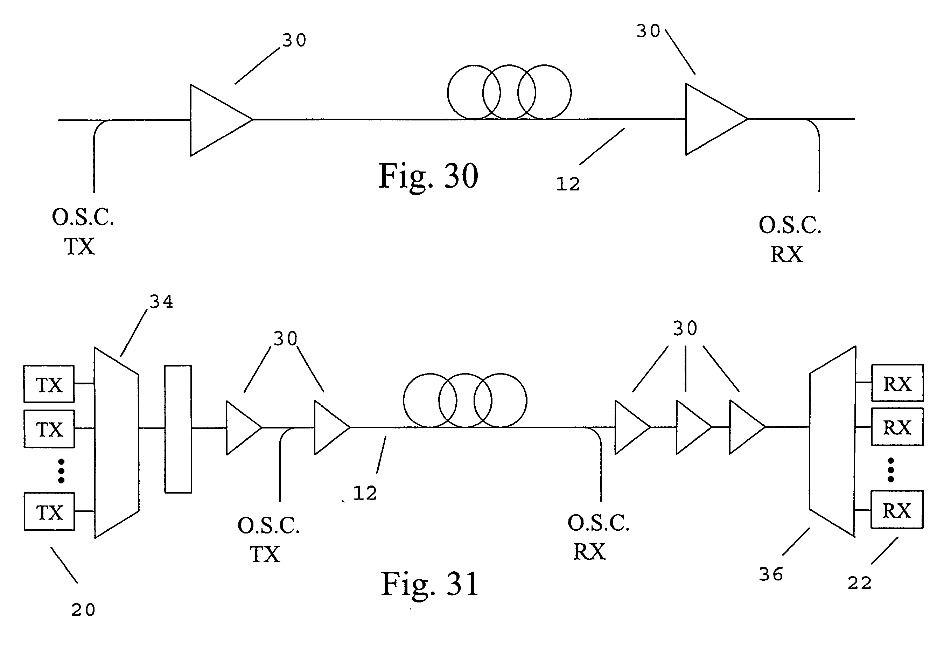

Data which is transmitted over terrestrial transmission line can be amplified when it is required. On the other hand, amplification of signals are much more complicated for sub-marine systems . Repeaterless systems are well-adapted for short submarine lengths (several hundred kilometers). The OSC has to be transmitted over the transmission line with a sufficient power to be detected and to be analyzed. The present invention discloses methods and devices for transmission of the OSC. Fig. 30. illustrates an example of a portion of a transmission system utilizing an optical service channel. In that embodiment, the OSC may be transmitted within the C band, typically between about 1530nm to about 1565nm, to take advantage of amplifiers 30 within the system 10, thereby allowing the OSC to be transmitted farther without the need for O-E-O regeneration. For example, the OSC may be transmitted at 1563.05nm, and as such can take advantage of the amplifiers 30 in the system 10.

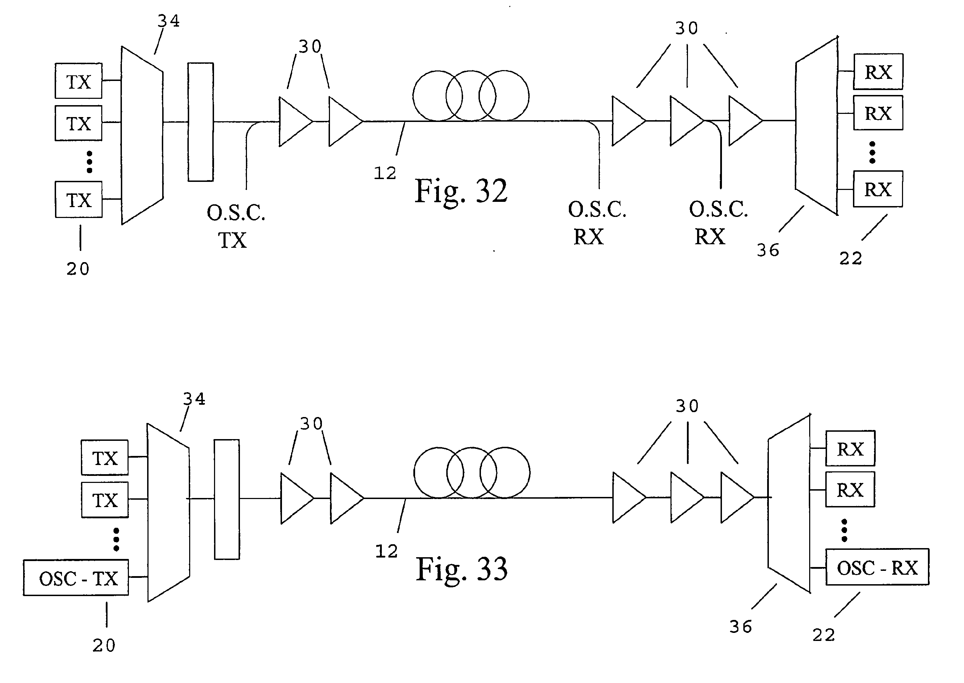

Figs. 31 and 32 illustrate other embodiments of the system 10 utilizing the OSC. In Fig. 31, the OSC is inserted at the transmission site after an EDFA but before a Raman amplifier, and the OSC is removed or dropped before a counter-propagating Raman amplifier so that the OSC takes advantages of both copropagating Raman amplification and counter propagating Raman amplification. In Fig. 32, the OSC is inserted at the transmission site before both an EDFA and a Raman amplifier, thereby utilizing both Raman and EDFA amplification. The OSC can be removed or dropped either before the EDFA or after the EDFA. Other variations and combinations of amplification are also possible. For example, the OSC may pass through more or less amplifiers 30 than those illustrated in Figs. 30-32, and may be used with combinations of amplifiers 30 other than those illustrated in Figs. 30-32. The OSC may be used at other locations within the optical signal spectrum, such as in the L-band or the S-band, or in other locations which allow the OSC to realize the benefits of the present invention. Of course, the amplifiers other than EDFAs may be used, such as other DFA or other lumped or distributed amplifiers. Fig. 33 illustrates another embodiment in which the OSC is inserted and removed like a payload channel at the transmitter and receiver, respectively . In other words, the OSC is inserted and takes the place of a payload channel, which is multiplexed with the other signals at the transmission site and demultiplexed at the reception site. During the transmission, the OSC takes advantage of all amplification in the transmission line.

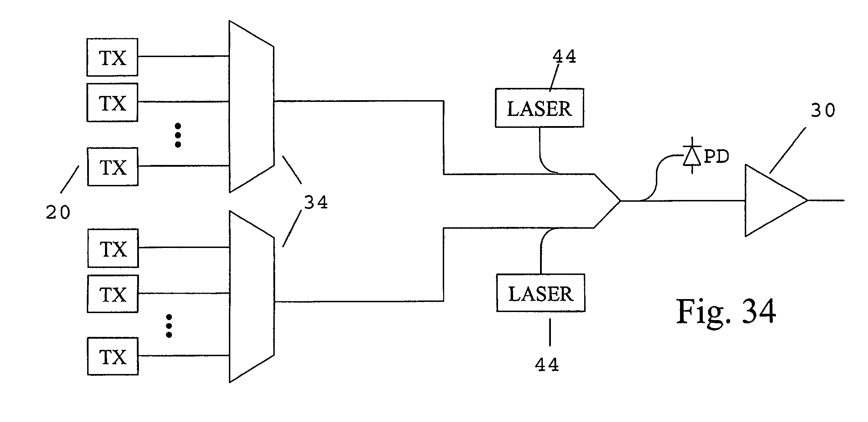

Fig. 34 illustrates one embodiment of a portion of the system 10 in which several transmitters 20 are wavelength division multiplexed together, and then amplified by an EDFA. The proper operation of an amplifier 30 depends on the input power provided to the amplifier 30 and it depends on the external pump units (EPU) which can be added in order to increase the power of the amplifier. A problem solved is to provide a system which can compensate for a lack of input power, such as, due to the loss of a channel or the loss of a multiplexer (with for instance 20 channels). In other words, the invention discloses a device able to provide a constant power at the amplifier input regardless of the number of channels, i.e. whatever the input power. This constant power P is the sum of the power of each channel and the power of the control laser.

A photodetector PD, such as a photodiode, detects the power in the optical path and provides feedback to one or more control lasers 44. The control lasers 44 provide additional power into the optical path before the EDFA, such as to provide for desired amplification characteristics in the EDFA. For instance, if the input power is too low, then the photodiode provides a feedback to the control lasers 44, which increase their power in order to maintain a constant input power. If the input power is too high, the power is reduced. For example, the gain profile of an EDFA is dependent on the optical power passing through the optical path at the EDFA. Therefore, the control lasers 44 allow the power to be controlled such as, for example, when channels are dropped or otherwise cause the total power in the optical path to change. When the control lasers 44 are co-propagating with the optical signals, the control lasers 44 provide optical power at a wavelength that is not also occupied by a data channel. Multiple control lasers 44 may be used across the optical spectrum to more evenly distribute power. The control lasers 44 are illustrated as being used near the transmitters 20 so that the control lasers 44 will propagate with the data signals through at least a portion of the system 10, although they may also be utilized away from the transmitters 20, such as near an all-optical switch or OADM. Furthermore, benefits of the control lasers 44 can be realized with amplification other than EDFAs, such as Raman amplification or DFA or more generally any lumped amplifier.

It is well known that various devices and components may be organized on circuit boards or cards, and may be further organized into several boards which may be grouped together to form modules. The circuit boards may be housed in one or more racks, and the racks may include additional devices, such as power supplies, heating and cooling devices, or other devices to serve some or all of the circuit boards in the rack. The racks are typically organized with the circuit boards oriented vertically on one or more shelves. Alternatively, the racks may be organized with the circuit boards oriented horizontally in the racks. If the circuit boards are oriented horizontally, non-conventional cooling systems may be used, such as with fans on each circuit board to move air across the circuit boards and out one of the sides. In addition, a horizontal circuit board configuration may benefit from fiber management concentrated vertically, such as along one or more sides of the rack. The horizontally-oriented circuit boards also offer flexibility because any kind of boards can be adapted to be horizontally-oriented. Furthermore, the horizontally-oriented circuit boards may be made stackable, such that racks are not required. Both vertical and horizontal circuit board configurations may benefit from either centralized or distributed power units, such as power supplies and circuit breakers on each circuit board to simplify power distribution in the racks and so that each circuit board is independent.

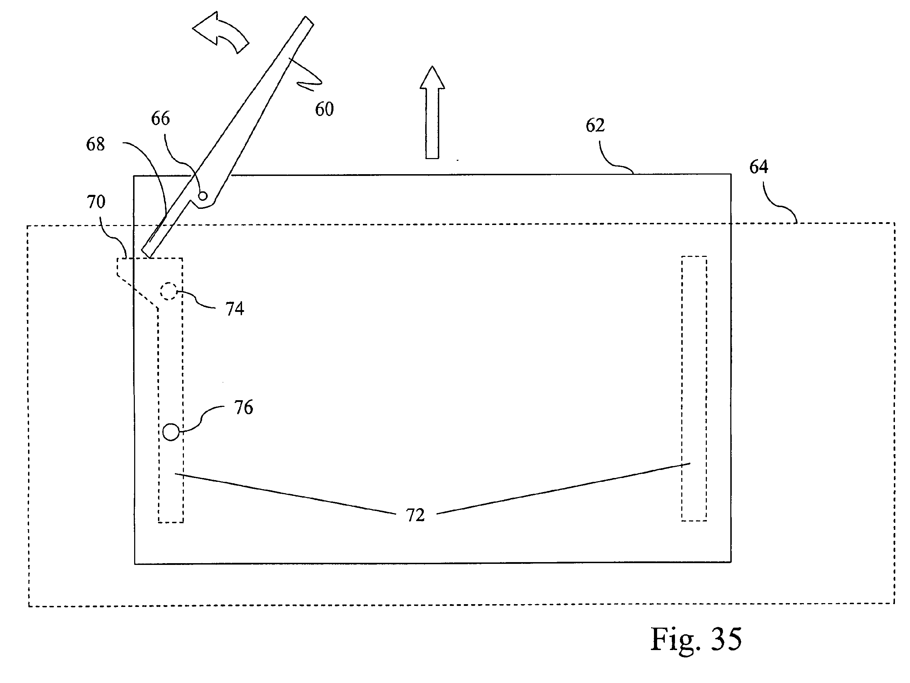

Regardless of the orientation of the circuit boards or modules, devices may be provided to facilitate the removal of the circuit boards or modules. Fig. 35 illustrates one embodiment of a lever 60 to facilitate the removal of a circuit board of module 62 form another device 64 (shown in broken lines), such as another circuit board or module, a shelf, a rack, or other devices. Lever 60 maybe incorporated into the module 62, thereby requiring no extra volume. In that embodiment, the lever 60 applies a mechanical force to the other device 64 when the lever 60 is moved from one position to another position. As a result, operation of the lever 60 can cause a circuit board or module to be more easily removed from the rack or other device. The lever 60 pivots about a pivot point 66 and causes another portion of the lever 68 to apply mechanical force against a portion 70 of the device 64 from which the circuit board or module 62 is to be removed. The lever returns automatically to its folded-up position to avoid hanging on it. It can be realized by either a spring attached between the lever and the other side to module 62 (not shown in the figure), or by using the elasticized properties of the materials composing the lever itself.

The circuit board or module 62 may be used in conjunction with slides or grooves 72 that facilitate its insertion and/or removal. The illustrated embodiment further includes a spring-loaded ball or pin 74 and corresponding recess 76 as a safety feature. As the circuit board 62 is removed, the recess 76 in the circuit board 62 approaches and then engages the pin 74, thereby providing significant resistance to moving the circuit board 62. As a result, the board 62 will not inadvertently slide out from the other device 64. If removal is desired, addition removal force is applied, the recess 76 is forced beyond the spring-loaded pin 74, and the board 62 can be removed. Of course, this device can be applied with several spring-loaded balls/pins 74, which can be located on different places on one and/or on both slides/grooves 72.

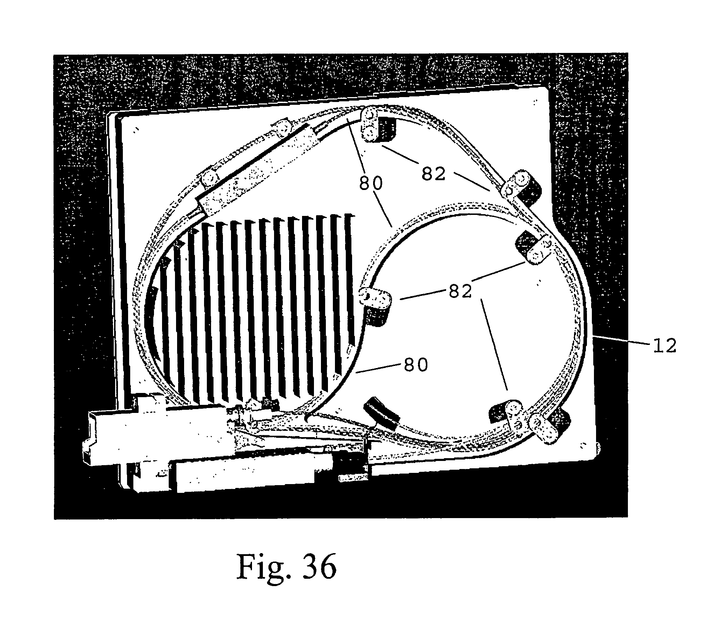

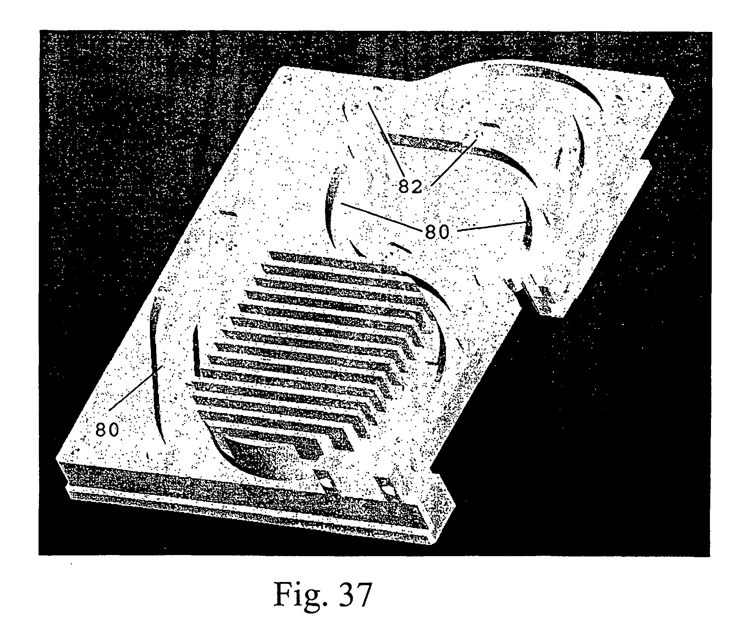

Circuit boards or modules may include optical fiber connecting components and devices on the board or module to other components or devices on the same board or module, on another board or module in the rack, in another rack, or elsewhere. Fig. 36 illustrates one embodiment of a module filling different functions such as for instance, support for optical/electronic components, heat sink , and coiled fiber box . Figure 36 shows how optical fiber 12 is managed with recesses 80 and clips 82 to secure the optical fiber 12 and maintain the fiber 12, and to keep it from obstructing access to components on the board or module. Fig. 37 illustrates the module of Fig. 36, but without the fiber 12 or clips 82, to better illustrate the recesses 80 which secure the fiber 12 below the surface of the module, thereby providing easier access to components on the module. The clips 82 may also be placed in recesses 80, so as to reduce the extent to which the clips 82 protrude from the surface of the module.

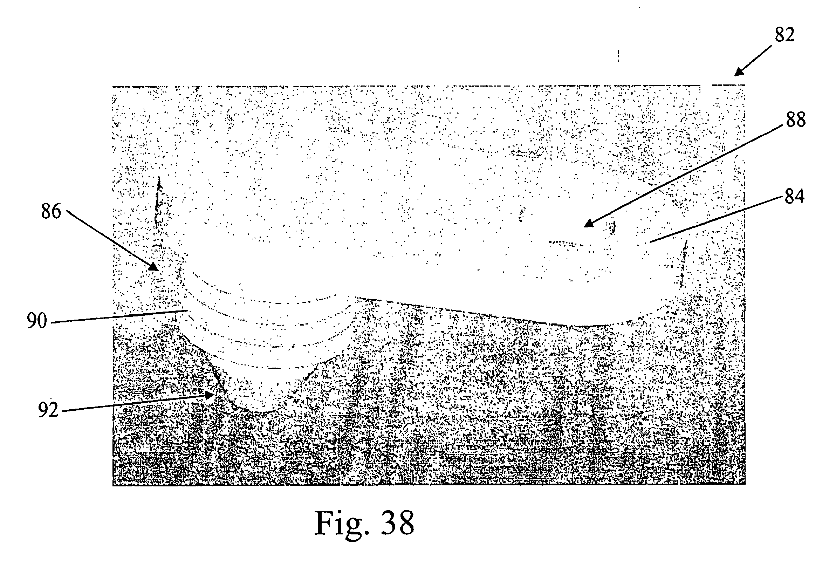

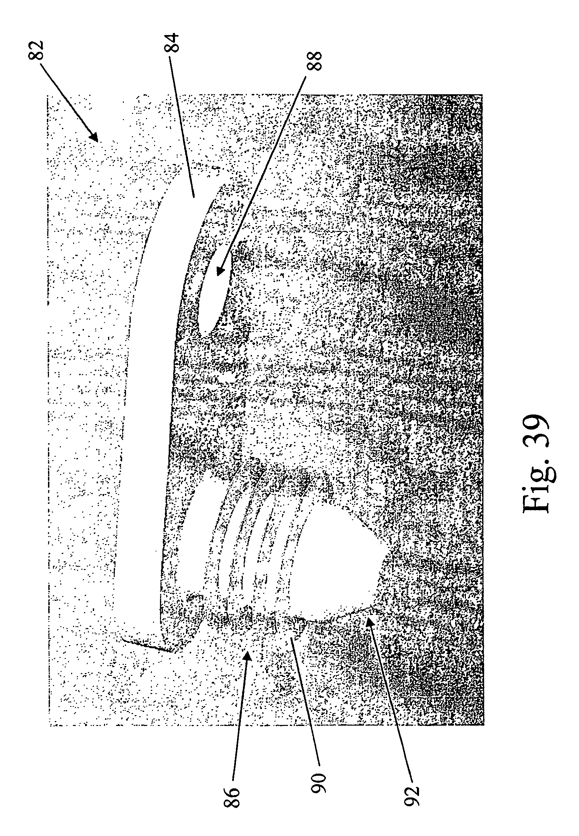

Figs. 38 and 39 illustrate one embodiment of the clips 82. That embodiment is a single piece including a retaining portion 84 for retaining fiber 12, and a post portion 86 for attachment to the circuit board or module 62. The clip 82 may be made through injection molding or other manufacturing processes, and may be made from a variety of materials, such as metals and plastics. The clip 82 may include a notch or opening 88 in the retaining portion 84 to facilitate the manipulation of the clip 82. The post portion 86 may include one or more lips or ridges 90 which engage an opening into which the clip 82 is inserted and retain the clip within the opening. The post portion 86 may also include a tapered or rounded end 92 to ease the insertion of the post portion 86 into an opening on a circuit board or module 62. The opening may be, for example, smooth or tapped to provide desired combinations of insertion, retention, and removal characteristics.
The clip 82 may have many other variations. For example, the retaining portion 84 may have shapes other than the elongated, oval shape illustrated herein. Also, the post portion may have an end which is neither tapered nor rounded, such as a flattened end or other shaped ends. Furthermore, the clip 82 itself may take other forms. For example, the clip may be formed from two or more pieces, such as a retaining portion and a screw or other item forming the post portion. In such an embodiment, the clip portion could include a post opening through which the post portion passes. The clip can then be screwed into the circuit board or module 62 to which the clip 82 is to be attached. The post opening in the clip portion may be smooth or tapped, and if it is smooth a collar or similar device may be used to support the clip portion a desired distance above the surface of the circuit board or module 62.

## Claims

1. An optical system, comprising an amplifier (30) including a signal input (IN2), a signal output (OUT2), and **characterized in that** it also comprises an external pump unit (58), and **in that**:
the amplifier (30) also includes an optical source (OS) for producing an optical signal, at least one pump input (PUMP IN) for receiving external pump signals from the external pump unit (58) and for outputting the optical signal from the optical source (OS); and
the external pump unit (58) includes at least one pump output (PUMP OUT) connected to the at least one pump input (PUMP IN) and the external pump unit (58) includes at least one photodetector (PD1) for detecting the optical signal from the optical source (OS).

2. An optical system, comprising an amplifier (30) including a signal input (IN2), a signal output (OUT2), and **characterized in that** it also comprises an external pump unit (58), and **in that**:
the amplifier (30) also includes an optical source (OS) for producing an optical signal, at least two pump inputs (PUMP IN) for receiving external pump signals from the external pump unit (58) and for outputting the optical signal from the optical source (OS); and
the external pump unit (58) includes at least one pump output (PUMP OUT) connected to the at least two pump inputs (PUMP IN), and the external pump unit (58) include at least one photodetector (PD1) for detecting the optical signal from the optical source (OS).

3. The optical system of one of the previous claims, **characterized in that** the pumps wavelengths are different and in the 1420nm to 1490nm range.

4. The optical system of one of the previous claims, **characterized in that** the optical signal wavelength is in the 1420nm to 1490nm range.

5. The optical system of claim 4, **characterized in that** the optical source (OS) produces an optical signal having a wavelength in a range of 1420 nm to 1490 nm.

6. The optical system of claim 5, **characterized in that** the optical source (OS) produces an optical signal having a wavelength of 1480 nm.

7. The optical system of claim 1 or 2, **characterized in that** the amplifier (30) includes:
x pump inputs (PUMP IN), where x is an integer greater than or equal to 1;
a splitter (S5) for splitting the optical signal into x split optical signals;
x splitters for connecting the split optical signals to the pump inputs (PUMP IN) and for connecting the pump inputs (PUMP IN) to a pump combiner (M2).

8. The optical system of claim 7, **characterized in that** the amplifier (30) includes:
two pump inputs (lambda 1 PUMP IN, lambda 2 PUMP IN);
a splitter (S5) for splitting the optical signal into two split optical signals;
two splitters (S6, S7) for connecting the split optical signals to the pump inputs ( lambda 1 PUMP IN, lambda 2 PUMP IN) and for connecting the pump inputs (lambda 1 PUMP IN, lambda 2 PUMP IN) to a pump combiner (M1).

9. The optical system of claim 7, **characterized in that** the amplifier (30) includes:
four pump inputs (PUMP IN 1, PUMP IN 2, PUMP IN 3, PUMP IN 4);
a splitter (S5) for splitting the optical signal into four split optical signals;
four splitters (S6, S7, S8, S9) for connecting the split optical signals to the pump inputs (PUMP IN 1, PUMP IN 2, PUMP IN 3, PUMP IN 4) and for connecting the pump inputs to a pump combiner (M1).

10. The optical system of claim 8, **characterized in that** the amplifier (30) includes an isolator between the optical source (OS) and the splitter (S5).

11. The optical system of claim 1 or 2, **characterized in that** the external pump unit (58) includes x pump outputs (PUMP OUT) and x photodetectors (PD1, ..., PDx) for detecting the optical signal from the optical source (OS), where x is an integer greater than or equal to 1.

12. The optical system of claim 11, **characterized in that** the external pump unit (58) includes one pump output (PUMP OUT) and one photodetector (PD1) for detecting the optical signal from the optical source (OS).

13. The optical system of claim 11, **characterized in that** the external pump unit (58) includes two pump outputs (lambda 1 PUMP OUT, lambda 2 PUMP OUT) and two photodetectors (PD1, PD3) for detecting the optical signal from the optical source (OS).

14. The optical system of claim 11, **characterized in that** the amplifier (30) includes at least one unused pump input (PUMP IN) which can be connected to at least one additional external pump unit (58) to provide additional amplification.

15. The optical system of claim 14, **characterized in that** the amplifier (30) can be used either for upgrading, or for maintenance, or for reparation.

16. The optical system of one of the previous claims, **characterized in that** the external pump unit (58) includes at least one class III pump source.

17. The optical system of claim 1 or claim 2, **characterized in that** the external pump unit (58) includes:
at least two pump sources (lambda 1 PUMP, lambda 2 PUMP);
an optical combiner (M1) for combining the at least two pump sources (lambda 1 PUMP, lambda 2 PUMP); and
wherein the photodetector (PD 1) is located between the optical combiner (M1) and the pump outputs (PUMP OUT) of the external pump unit (58).

18. A method of detecting proper optical interconnection between an optical amplifier (30) and an external pump unit (58), **characterized in that** the method includes:
generating an optical signal from an optical source in the amplifier (30);
directing the optical signal out of the amplifier via at least one pump input (PUMP IN);
detecting the optical signal in the external pump unit (58);
controlling at least one pump (PUMP) in the external pump unit (58) in response to optical signal detected in the external pump unit (58).

19. The method of claim 18, **characterized in that** the pumps are turned off if the optical signal is below a predetermined threshold.

20. The method of claim 19, **characterized in that** the method further includes splitting the optical signal into at least two split optical signals and directing the split optical signals out of the amplifier via at least two pump inputs (PUMP IN).

21. The method of claim 19, **characterized in that** the method includes generating an optical signal with a wavelength that is in the same wavelength range as the pumps.

22. The method of claim 21, **characterized in that** the method includes generating an optical signal in an optical signal wavelength range of 1420 nm to 1490 nm.

23. The method of claim 22, **characterized in that** the method includes generating an optical signal having a signal wavelength of 1480 nm.

24. An optical communications system (10), including at least one transmitter (20), at least one receiver (22), optical waveguides (12) connecting the at least one transmitter (20) to the at least one receiver (22), and at least one amplifier (30) connected to the optical waveguides (12) between the at least one transmitter (20) and the at least one receiver (22), **characterized in that** it also comprises at least one external pump unit (58), and **in that**:
the amplifier (30) includes a signal input (IN2), a signal output (OUT2), an optical source (OS) for producing an optical signal;, at least one pump input (PUMP IN) for receiving external pump signals from the external pump unit (58) and for outputting the optical signal from the optical source; and the external pump unit includes at least one pump output (PUMP OUT) connected to the at least on pump input (PUMP IN); and
the external pump unit (58) includes at least one photodetector (PD1) for detecting the optical signal from the optical source (OS).

## Patentansprüche

1. Optisches System, das einen Verstärker (30) umfasst, der einen Signaleingang (IN2) und einen Signalausgang (OUT2) einschließt, und das **dadurch gekennzeichnet ist, dass** es auch eine externe Pumpeneinheit (58) umfasst, und **dadurch**, dass:
der Verstärker (30) auch eine optische Quelle (OS) zum Erzeugen eines optischen Signals und wenigstens einen Pumpeneingang (PUMP IN) zum Empfangen externer Pumpensignale von der externen Pumpeneinheit (58) und zum Ausgeben des optischen Signals von der optischen Quelle (OS) umfasst; und
die externe Pumpeneinheit (58) wenigstens einen Pumpenausgang (PUMP OUT) umfasst, der mit dem wenigstens einen Pumpeneingang (PUMP IN) verbunden ist, und die externe Pumpeneinheit (58) wenigstens einen Photodetektor (PD1) zum Detektieren des optischen Signals von der optischen Quelle (OS) umfasst.

2. Optisches System, das einen Verstärker (30) umfasst, der einen Signaleingang (IN2) und einen Signalausgang (OUT2) umfasst, und das **dadurch gekennzeichnet ist, dass** es auch eine externe Pumpeneinheit (58) umfasst, und **dadurch**, dass:
der Verstärker (30) auch eine optische Quelle (OS) zum Erzeugen eines optischen Signals und wenigstens zwei Pumpeneingänge (PUMP IN) zum Empfangen externer Pumpensignale von der externen Pumpeneinheit (58) und zum Ausgeben des optischen Signals von der optischen Quelle (OS) umfasst; und
die externe Pumpeneinheit (58) wenigstens einen Pumpenausgang (PUMP OUT) umfasst, der mit den wenigstens zwei Pumpeneingängen (PUMP IN) verbunden ist, und die externe Pumpeneinheit (58) wenigstens einen Photodetektor (PD1) zum Detektieren des optischen Signals von der optischen Quelle (OS) umfasst.

3. Optisches System nach einem der vorhergehenden Ansprüche, **dadurch gekennzeichnet, dass** die Pumpenwellenlängen verschieden sind und im Bereich von 1420 nm bis 1490 nm liegen.

4. Optisches System nach einem der vorhergehenden Ansprüche, **dadurch gekennzeichnet, dass** die Wellenlänge des optischen Signals im Bereich von 1420 nm bis 1490 nm liegt.

5. Optisches System nach Anspruch 4, **dadurch gekennzeichnet, dass** die optische Quelle (OS) ein optisches Signal erzeugt, das eine Wellenlänge in einem Bereich von 1420 nm bis 1490 nm hat.

6. Optisches System nach Anspruch 5, **dadurch gekennzeichnet, dass** die optische Quelle (OS) ein optisches Signal erzeugt, das eine Wellenlänge von 1480 nm hat.

7. Optisches System nach Anspruch 1 oder 2, **dadurch gekennzeichnet, dass** der Verstärker (30) folgendes umfasst:
x Pumpeneingänge (PUMP IN), wobei x ein ganze Zahl größer oder gleich 1 ist;
einen Splitter (S5) zum Aufteilen des optischen Signals in x aufgeteilte optische Signale;
x Splitter zum Verbinden der aufgeteilten optischen Signale mit den Pumpeneingängen (PUMP IN) und zum Verbinden der Pumpeneingänge (PUMP IN) mit einem Pumpenkombinierer (M2).

8. Optisches System nach Anspruch 7, **dadurch gekennzeichnet, dass** der Verstärker (30) folgendes umfasst:
zwei Pumpeneingänge (lambda 1 PUMP IN, lambda 2 PUMP IN);
einen Splitter (S5) zum Aufteilen des optischen Signals in zwei aufgeteilte optische Signale;
zwei Splitter (S6, S7) zum Verbinden der aufgeteilten optischen Signale mit den Pumpeneingängen (lambda 1 PUMP IN, lambda 2 PUMP IN) und zum Verbinden der Pumpeneingänge (lambda 1 PUMP IN, lambda 2 PUMP IN) mit einem Pumpenkombinierer (M1).

9. Optisches System nach Anspruch 7, **dadurch gekennzeichnet, dass** der Verstärker (30) folgendes umfasst:
vier Pumpeneingänge (PUMP IN 1, PUMP IN 2, PUMP IN 3, PUMP IN 4);
einen Splitter (S5) zum Aufteilen des optischen Signals in vier aufgeteilte optische Signale;
vier Splitter (S6, S7, S8, S9) zum Verbinden der aufgeteilten optischen Signale mit den Pumpeneingängen (PUMP IN 1, PUMP IN 2, PUMP IN 3, PUMP IN 4) und zum Verbinden der Pumpeneingänge mit einem Pumpenkombinierer (M1).

10. Optisches System nach Anspruch 8, **dadurch gekennzeichnet, dass** der Verstärker (30) zwischen der optischen Quelle (OS) und dem Splitter (S5) einen Isolator umfasst.

11. Optisches System nach Anspruch 1 oder 2, **dadurch gekennzeichnet, dass** die externe Pumpeneinheit (58) x Pumpenausgänge (PUMP OUT) und x Photodetektoren (PD1, ..., PDx) zum Detektieren des optischen Signals von der optischen Quelle (OS) umfasst, wobei x eine ganze Zahl größer als oder gleich 1 ist.

12. Optisches System nach Anspruch 11, **dadurch gekennzeichnet, dass** die externe Pumpeneinheit (58) einen Pumpenausgang (PUMP OUT) und einen Photodetektor (PD1) zum Detektieren des optischen Signals von der optischen Quelle (OS) umfasst.

13. Optisches System nach Anspruch 11, **dadurch gekennzeichnet, dass** die externe Pumpeneinheit (58) zwei Pumpenausgänge (lambda 1 PUMP OUT, lambda 2 PUMP OUT) und zwei Photodetektoren (PD1, PD3) zum Detektieren des optischen Signals von der optischen Quelle (OS) umfasst.

14. Optisches System nach Anspruch 11, **dadurch gekennzeichnet, dass** der Verstärker (30) wenigstens einen unbenutzten Pumpeneingang (PUMP IN) umfasst, der mit wenigstens einer zusätzlichen externen Pumpeneinheit (58) verbunden werden kann, um eine zusätzliche Verstärkung bereitzustellen.

15. Optisches System nach Anspruch 14, **dadurch gekennzeichnet, dass** der Verstärker (30) entweder zur Aufrüstung oder zur Wartung oder als Ersatz verwendet werden kann.

16. Optisches System nach einem der vorhergehenden Ansprüche, **dadurch gekennzeichnet, dass** die externe Pumpeneinheit (58) wenigstens eine Klasse III Pumpenquelle umfasst.

17. Optisches System nach Anspruch 1 oder Anspruch 2, **dadurch gekennzeichnet, dass** die externe Pumpeneinheit (58) folgendes umfasst:
wenigstens zwei Pumpenquellen (lambda 1 PUMP, lambda 2 PUMP);
einen optischen Kombinierer (M1) zum Kombinieren der wenigstens zwei Pumpenquellen (lambda 1 PUMP, lambda 2 PUMP); und
wobei der Photodetektor (PD1) sich zwischen dem optischen Kombinierer (M1) und den Pumpenausgängen (PUMP OUT) der externen Pumpeneinheit (58) befindet.

18. Verfahren zur Detektion einer ordnungsgemäßen optischen Verbindung zwischen einem optischen Verstärker (30) und einer externen Pumpeneinheit (58), **dadurch gekennzeichnet, dass** das Verfahren folgendes umfasst:
Erzeugen eines optischen Signals von einer optischen Quelle im Verstärker (30);
Herausleiten des optischen Signals aus dem Verstärker über wenigstens einen Pumpeneingang (PUMP IN);
Detektieren des optischen Signals in der externen Pumpeneinheit (58);
Steuern wenigstens einer Pumpe (PUMP) in der externen Pumpeneinheit (58) in Antwort auf das in der externen Pumpeneinheit (58) detektierte optische Signal.

19. Verfahren nach Anspruch 18, **dadurch gekennzeichnet, dass** die Pumpen abgeschaltet werden, wenn das optische Signal unter einem vorbestimmten Schwellwert liegt.

20. Verfahren nach Anspruch 19, **dadurch gekennzeichnet, dass** das Verfahren außerdem das Aufteilen des optischen Signals in wenigstens zwei aufgeteilte optische Signale und das Herausleiten der aufgeteilten optische Signale aus dem Verstärker über wenigstens zwei Pumpeneingänge (PUMP IN) umfasst.

21. Verfahren nach Anspruch 19, **dadurch gekennzeichnet, dass** das Verfahren das Erzeugen eines optischen Signals mit einer Wellenlänge umfasst, die im selben Wellenlängenbereich wie die Pumpen liegt.

22. Verfahren nach Anspruch 21, **dadurch gekennzeichnet, dass** das Verfahren das Erzeugen eines optischen Signals in einem Wellenlängenbereich des optischen Signals von 1420 nm bis 1490 nm umfasst.

23. Verfahren nach Anspruch 22, **dadurch gekennzeichnet, dass** das Verfahren das Erzeugen eines optischen Signals mit einer Signalwellenlänge von 1480 nm umfasst.

24. Optisches Kommunikationssystem (10), das wenigstens einen Sender (20), wenigstens einen Empfänger (22), optische Wellenleiter (12), die den wenigstens einen Sender (20) mit dem wenigstens einen Empfänger (22) verbinden, und wenigstens einen Verstärker (30), der zwischen dem wenigstens einen Sender (20) und dem wenigstens einen Empfänger (22) mit den optischen Wellenleitern (12) verbunden ist, umfasst, **dadurch gekennzeichnet, dass** es ebenfalls wenigstens eine externe Pumpeneinheit (58) umfasst und **dadurch**, dass:
der Verstärker (30) folgendes umfasst: einen Signaleingang (IN2), einen Signalausgang (OUT2), eine optische Quelle (OS) zum Erzeugen eines optischen Signals, wenigstens einen Pumpeneingang (PUMP IN) zum Empfangen externer Pumpensignale von der externen Pumpeneinheit (58) und zum Ausgeben des optischen Signals von der optischen Quelle; und die externe Pumpeneinheit wenigstens einen Pumpenausgang (PUMP OUT) umfasst, der mit dem wenigstens einen Pumpeneingang (PUMP IN) verbunden ist; und
die externe Pumpeneinheit (58) wenigstens einen Photodetektor (PD1) zum Detektieren des optischen Signals von der optischen Quelle (OS) umfasst.

## Revendications

1. Système optique, comprenant un amplificateur (30) comprenant une entrée de signal (IN2), une sortie de signal (OUT2) et **caractérisé en ce qu'**il comprend également une unité de pompe externe (58), et **en ce que** :
l'amplificateur (30) comprend également une source optique (OS) destinée à produire un signal optique, au moins une entrée de pompe (PUMP IN) destinée à recevoir des signaux de pompe externes en provenance de l'unité de pompe externe (58) et destinée à émettre le signal optique provenant de la source optique (OS) ; et
l'unité de pompe externe (58) comprend au moins une sortie de pompe (PUMP OUT) raccordée à au moins une entrée de pompe (PUMP IN) et l'unité de pompe externe (58) comprend au moins un photodétecteur (PD1) destiné à détecter le signal optique en provenance de la source optique (OS).

2. Système optique, comprenant (30) une entrée de signal (IN2), une sortie de signal (OUT2), et **caractérisé en ce qu'**il comprend également une unité de pompe externe (58), et **en ce que** :
l'amplificateur (30) comprend également une source optique (OS) destinée à produire un signal optique, au moins deux entrées de pompe (PUMP IN) destinées à recevoir des signaux de pompe externe en provenance de l'unité de pompe externe (58) et destinées à émettre le signal optique provenant de la source optique (OS) ; et
l'unité de pompe externe (58) comprend au moins une sortie de pompe (PUMP OUT) raccordée aux dites au moins deux entrées de pompe (PUMP IN), et l'unité de pompe externe (58) comprend au moins un photodétecteur (PD1) destiné à détecter le signal optique en provenance de la source optique (OS).

3. Système optique selon l'une des revendications précédentes, **caractérisé en ce que** les longueurs d'onde de pompes sont différentes et dans la plage de 1420 nm à 1490 nm.

4. Système optique selon l'une des revendications précédentes, **caractérisé en ce que** la longueur d'onde de signal optique est dans la plage de 1420 nm à 1490 nm.

5. Système optique selon la revendication 4, **caractérisé en ce que** la source optique (OS) produit un signal optique ayant une longueur d'onde dans une plage de 1420 nm à 1490 nm.

6. Système optique selon la revendication 5, **caractérisé en ce que** la source optique (OS) produit un signal optique ayant une longueur d'onde de 1480 nm.

7. Système optique selon la revendication 1 ou 2, **caractérisé en ce que** l'amplificateur (30) comprend :
x entrées de pompe (PUMP IN), où x est un entier supérieur ou égal à 1 ;
un séparateur (S5) destiné à séparer le signal optique en x signaux optiques séparés ;
x séparateurs destinés à raccorder les signaux optiques séparés aux entrées de pompe (PUMP IN) et destinés à raccorder les entrées de pompe (PUMP IN) à un combineur de pompe (M2).

8. Système optique selon la revendication 7, **caractérisé en ce que** l'amplificateur (30) comprend :
deux entrées de pompe (lambda 1 PUMP IN, lambda 2 PUMP IN) ;
un séparateur (S5) destiné à séparer le signal optique en deux signaux optiques séparés ;
deux séparateurs (S6, S7) destinés à raccorder les signaux optiques séparés aux entrées de pompe (lambda 1 PUMP IN, lambda 2 PUMP IN) et destinés à raccorder les entrées de pompe (lambda 1 PUMP IN, lambda 2 PUMP IN) à un combineur de pompe (M1).

9. Système optique selon la revendication 7, **caractérisé en ce que** l'amplificateur (30) comprend :
quatre entrées de pompe (PUMP IN 1, PUMP IN 2, PUMP IN 3, PUMP IN 4) ;
un séparateur (S5) destiné à séparer le signal optique en quatre signaux optiques séparés ;
quatre séparateurs (S6, S7, S8, S9) destinés à raccorder les signaux optiques séparés aux entrées de pompe (PUMP IN 1, PUMP IN 2, PUMP IN 3, PUMP IN 4) et destinés à raccorder les entrées de pompe à un combineur de pompe (M1).

10. Système optique selon la revendication 8, **caractérisé en ce que** l'amplificateur (30) comprend un isolateur entre la source optique (OS) et le séparateur (S5) .

11. Système optique selon la revendication 1 ou 2, **caractérisé en ce que** l'unité de pompe externe (58) comprend x sorties de pompe (PUMP OUT) et x photodétecteurs (PD1, ..., PDx) destinées à détecter le signa optique en provenance de la source optique (OS), où x est un entier supérieur ou égal à 1.

12. Système optique selon la revendication 11, **caractérisé en ce que** l'unité de pompe externe (58) comprend une sortie de pompe (PUMP OUT) et un photodétecteur (PD1) destiné à détecter le signal optique en provenance de la source optique (OS).

13. Système optique selon la revendication 11, **caractérisé en ce que** l'unité de pompe externe (58) comprend deux sorties de pompe (lambda 1 PUMP OUT, lambda 2 PUMP OUT) et deux photodétecteurs (PD1, PD3) destinés à détecter le signal optique en provenance de la source optique (OS).

14. Système optique selon la revendication 11, **caractérisé en ce que** l'amplificateur (30) comprend au moins une entrée de pompe inutilisée (PUMP IN) qui peut être raccordée à au moins une unité de pompe externe supplémentaire (58) pour fournir une amplificateur supplémentaire.

15. Système optique selon la revendication 14, **caractérisé en ce que** l'amplificateur (30) peut être utilisé pour une mise à niveau, ou pour un entretien ou pour une réparation.

16. Système optique selon l'une des revendications précédentes, **caractérisé en ce que** l'unité de pompe externe (58) comprend au moins une source de pompe de classe III.

17. Système optique selon la revendication 1 ou la revendication 2, **caractérisé en ce que** l'unité de pompe externe (58) comprend :
au moins deux sources de pompe (lambda 1 PUMP, lambda 2 PUMP) ;
un combineur optique (M1) destiné à combiner lesdites au moins deux sources de pompe .(lambda 1 PUMP, lambda 2 PUMP) ; et
dans lequel le photodétecteur (PD1) est situé entre le combineur optique (M1) et les sorties de pompe (PUMP OUT) de l'unité de pompe externe (58).

18. Procédé destiné à détecter une interconnexion optique correcte entre un amplificateur optique (30) et une unité de pompe externe (58), **caractérisé en ce que** le procédé comprend les étapes consistant à :
générer un signal optique à partir d'une source optique dans l'amplificateur (30) ;
diriger le signal optique hors de l'amplificateur par l'intermédiaire d'au moins une entrée de pompe (PUMP IN) ;
détecter le signal optique dans l'unité de pompe externe (58) ;
commander au moins une pompe (PUMP) dans l'unité de pompe externe (58) en réponse au signal optique détecté dans l'unité de pompe externe (58).

19. Procédé selon la revendication 18, **caractérisé en ce que** les pompes sont éteintes si le signal optique est inférieur à un seuil prédéterminé.

20. Procédé selon la revendication 19, **caractérisé en ce que** le procédé comprend en outre l'étape consistant à séparer le signal optique en au moins deux signaux optiques séparés et diriger les signaux optiques séparés hors de l'amplificateur par l'intermédiaire d'au moins deux entrées de pompe (PUMP IN).

21. Procédé selon la revendication 19, **caractérisé en ce que** le procédé comprend l'étape consistant à générer un signal optique avec une longueur d'onde qui est dans la même plage de longueur d'onde que les pompes.

22. Procédé selon la revendication 21, **caractérisé en ce que** le procédé comprend l'étape consistant à générer un signal optique dans une plage de longueur d'onde de signal optique de 1420 nm à 1490 nm.

23. Procédé selon la revendication 22, **caractérisé en ce que** le procédé comprend l'étape consistant à générer un signal optique ayant une longueur d'onde de signal de 1480 nm.

24. Système de communications optiques (10), comprenant au moins un émetteur (20), au moins un récepteur (22), des guides d'onde optique (12) raccordant ledit au moins un émetteur (20) au dit au moins un récepteur (22), et au moins un amplificateur (30) raccordé aux guides d'onde optique (12) entre ledit au moins un émetteur (20) et ledit au moins un récepteur (22), **caractérisé en ce qu'**il comprend également au moins une unité de pompe externe (58), et **en ce que**
l'amplificateur (30) comprend une entrée de signal (IN2), une sortie de signal (OUT2), une source optique (OS) destinée à produire un signal optique, au moins une entrée de pompe (PUMP IN) destinée à recevoir des signaux de pompe externe en provenance de l'unité de pompe externe (58) et destinée à émettre le signal optique en provenance de la source optique ; et l'unité de pompe externe comprend au moins une sortie de pompe (PUMP OUT) raccordée à ladite au moins une entrée de pompe (PUMP IN) ; et
l'unité de pompe externe (58) comprend au moins un photodétecteur (PD1) destiné à détecter le signal optique en provenance de la source optique (OS).
